# EUROPEAN PATENT APPLICATION

(11) **EP 4 297 352 A1**
(43) Date of publication of application: **27.12.2023**
(21) Application number: 21927127.7
(22) Date of filing: 23.02.2021
(51) Int. Cl.: H04L 12/66

(54) **DATA TRANSMISSION METHOD AND APPARATUS**

(71) Applicant: Huawei Technologies Co., Ltd., Shenzhen, Guangdong 518129 (CN)
(72) Inventor: ZHAO, Pengtao, Shenzhen, Guangdong 518129 (CN); LI, Yan, Shenzhen, Guangdong 518129 (CN)
(74) Representative: Huawei European IPR
(86) International application number: PCT/CN2021/077517
(87) International publication number: WO 2022/178682

(57) **Abstract**

This application relates to the field of communication technologies, and discloses a data transmission method and an apparatus. The method includes: An SMF network element obtains first transmission delay information of data packet transmission between an access network element and a terminal device, and sends third information to a first edge application server corresponding to a first UPF network element or a first edge enabler server corresponding to the first edge application server, where the third information includes the first transmission delay information, the third information is used to determine congestion control parameter information, and the congestion control parameter information indicates a data amount of a first service sent by a data sending network element to a second UPF network element for the first time after a UPF network element that serves the first service in the data sending network element is switched from the first UPF network element to the second UPF network element. According to the foregoing method, a slow start phase can be accelerated or even skipped, congestion control for re-establishing a transport layer connection can be optimized, data transmission efficiency can be improved, and a data transmission delay can be reduced.

## Description

### TECHNICAL FIELD

This application relates to the field of wireless communication technologies, and in particular, to a data transmission method and an apparatus.

### BACKGROUND

With the continuous growth of a quantity of various types of terminal devices, a computing service presents a trend of diversified and large-scale development. A conventional cloud computing technology has been difficult to meet growing service requirements. Therefore, a concept of edge computing is proposed. Edge computing is to move a service processing capability to a network edge, to process service traffic in a distributed manner. This avoids excessive concentration of traffic, and greatly reduces specification requirements for a core equipment room and a centralized gateway. In addition, edge computing also shortens a distance of a backhaul network, and reduces an end-to-end transmission delay and jitter of a user packet, so that deployment of an ultra-low-delay service becomes possible.

Because a communication network is in a shared environment, the network may be congested due to multi-party communication. When the network is congested, if a large quantity of data packets continue to be sent, a data packet delay may be increased, a data packet loss may occur, and the like. Consequently, data packet retransmission occurs. However, data packet retransmission causes heavier load of the network, and further causes a larger delay and more packet losses. Therefore, congestion control is introduced to avoid a case in which data sent by a sender fills the entire network.

For a service using edge computing, as the terminal device moves, the network needs to re-plan an appropriate user plane path for the terminal device, and perform service migration. During service migration, a sender and a receiver of service data need to re-establish a transport layer connection. When sending the data based on the re-established transport layer connection, the sender needs to go through a slow start phase of congestion control again. Consequently, a data transmission rate is reduced, and a transmission delay is increased. This affects user experience of a low-delay service.

### SUMMARY

This application provides a data transmission method and an apparatus, to resolve problems that a data transmission rate is reduced and a transmission delay is increased because when sending data based on a re-established transport layer connection, a sender needs to go through a slow start phase of congestion control again.

According to a first aspect, an embodiment of this application provides a data transmission method. The method is used to implement a function on a core network element side. For example, the method may be applied to an SMF network element or a chip in the SMF network element. A specific execution body of the method is not limited in this embodiment of this application. For example, the method is applied to the SMF network element. In the method, the SMF network element obtains first transmission delay information of data packet transmission between an access network element and a terminal device, and sends third information to a first edge application server corresponding to a first UPF network element or a first edge enabler server corresponding to the first edge application server, where the third information includes the first transmission delay information, the third information is used to determine congestion control parameter information, and the congestion control parameter information indicates a data amount of a first service sent by a data sending network element to a second UPF network element for the first time after a UPF network element that serves the first service in the data sending network element is switched from the first UPF network element to the second UPF network element.

According to the foregoing method, the SMF network element may send the third information to the first edge application server or the first edge enabler server, so that the first edge application server or the first edge enabler server can calculate the congestion control parameter information (for example, first congestion control parameter information and second congestion control parameter information), and send the congestion control parameter information to the data sending network element (for example, a second edge application server or the terminal device). In this way, after service migration occurs, the data sending network element may determine, based on the congestion control parameter information, the data amount of the first service sent to the second UPF network element for the first time, so that a slow start phase can be accelerated or even skipped, congestion control for re-establishing a transport layer connection can be optimized, data transmission efficiency can be improved, and a data transmission delay can be reduced. In addition, because the congestion control parameter information is determined based on at least the first transmission delay information included in the third information, the determined congestion control parameter information is more reasonable.

In a possible design, the obtaining first transmission delay information of data packet transmission between an access network element and a terminal device includes: sending first information to the first UPF network element, where the first information is used to request the first transmission delay information; and receiving the first transmission delay information from the first UPF network element; or sending second information to an NWDAF network element, where the second information is used to request the first transmission delay information; and receiving the first transmission delay information from the NWDAF.

In a possible design, the first information includes 5-tuple information of the first service.

In a possible design, the second information includes QoS parameter information of the first service and an identifier of the access network element.

In a possible design, the third information further includes a GFBR of the first service; or the third information further includes a GFBR of the first service and second transmission delay information of data packet transmission between the access network element and the second UPF network element.

In a possible design, the second transmission delay information is determined based on topology information between the access network element and the second UPF network element.

In a possible design, the second transmission delay information is transmission delay lower bound information of data packet transmission between the access network element and the second UPF network element.

In a possible design, the GFBR of the first service is an uplink GFBR, the data sending network element is the terminal device, and the data amount of the first service sent by the data sending network element to the second UPF network element for the first time is a data amount of the first service sent by the terminal device by using the second UPF network element to a second edge application server corresponding to the second UPF network element for the first time.

In a possible design, the GFBR of the first service is a downlink GFBR, the data sending network element is a second edge application server corresponding to the second UPF network element, and the data amount of the first service sent by the data sending network element to the second UPF network element for the first time is a data amount of the first service sent by the second edge application server to the terminal device by using the second UPF network element for the first time.

According to a second aspect, an embodiment of this application provides a data transmission method. The method is used to implement a function on a server side. For example, the method may be applied to a first edge enabler server or a chip in the first edge enabler server. For another example, the method may be applied to a first edge application server or a chip in the first edge application server. A specific execution body of the method is not limited in this embodiment of this application. For example, the method is applied to the first edge enabler server. In the method, the first edge enabler server receives third information from an SMF network element, where the third information includes first transmission delay information of data packet transmission between an access network element and a terminal device; determines congestion control parameter information based on the third information, where the congestion control parameter information indicates a data amount of a first service sent by a data sending network element to a second UPF network element for the first time after a UPF network element that serves the first service in the data sending network element is switched from a first UPF network element to the second UPF network element; and sends the congestion control parameter information to the data sending network element.

In a possible design, the data sending network element is the terminal device, and the data amount of the first service sent by the data sending network element to the second UPF network element for the first time is a data amount of the first service sent by the terminal device by using the second UPF network element to a second edge application server corresponding to the second UPF network element for the first time.

In a possible design, the sending the congestion control parameter information to the data sending network element includes: sending the congestion control parameter information to the terminal device by using a first edge application server corresponding to the first UPF network element.

In a possible design, the third information further includes an uplink GFBR of the first service; or the third information further includes an uplink GFBR of the first service and second transmission delay information of data packet transmission between the access network element and the second UPF network element.

In a possible design, the data sending network element is a second edge application server corresponding to the second UPF network element, and the data amount of the first service sent by the data sending network element to the second UPF network element for the first time is a data amount of the first service sent by the second edge application server to the terminal device by using the second UPF network element for the first time.

In a possible design, the sending the congestion control parameter information to the data sending network element includes: sending the congestion control parameter information to the second edge application server by using a first edge application server corresponding to the first UPF network element; or sending the congestion control parameter information to the second edge application server by using a second edge enabler server corresponding to the second edge application server.

In a possible design, the third information further includes a downlink GFBR of the first service; or the third information further includes a downlink GFBR of the first service and second transmission delay information of data packet transmission between the access network element and the second UPF network element.

According to a third aspect, an embodiment of this application provides a data transmission method. The method may be applied to a data sending network element or a chip in the data sending network element. The data sending network element may be a second edge application server or a terminal device. A specific execution body of the method is not limited in this embodiment of this application. For example, the method is applied to the data sending network element. In the method, the data sending network element receives congestion control parameter information, where the congestion control parameter information indicates a data amount of a first service sent by the data sending network element to a second UPF network element for the first time after a UPF network element that serves the first service in the data sending network element is switched from a first UPF network element to the second UPF network element; and sends a data packet of the first service based on the congestion control parameter information.

In a possible design, the data sending network element is a second edge application server corresponding to the second UPF network element, and the data amount of the first service sent by the data sending network element to the second UPF network element for the first time is a data amount of the first service sent by the second edge application server to the terminal device by using the second UPF network element for the first time.

In a possible design, the receiving congestion control parameter information includes: receiving the congestion control parameter information sent by a first edge application server corresponding to the first UPF network element; or receiving the congestion control parameter information sent by a second edge enabler server corresponding to the second edge application server.

In a possible design, the data sending network element is a terminal device, and the data amount of the first service sent by the data sending network element to the second UPF network element for the first time is a data amount of the first service sent by the terminal device by using the second UPF network element to a second edge application server corresponding to the second UPF network element for the first time.

In a possible design, the receiving congestion control parameter information includes: receiving the congestion control parameter information sent by a first edge application server corresponding to the first UPF network element; or receiving the congestion control parameter information sent by a first edge enabler server corresponding to a first edge application server.

In a possible design, the receiving the congestion control parameter information sent by a first edge enabler server corresponding to a first edge application server includes: An edge enabler client in the terminal device receives the congestion control parameter information sent by the first edge enabler server, and sends the congestion control parameter information to an application client in the terminal device.

It should be noted that the methods described in the second aspect and the third aspect correspond to the method described in the first aspect. Therefore, for beneficial effects of related technical features in the methods described in the second aspect and the third aspect, refer to the first aspect. Details are not described again.

According to a fourth aspect, an embodiment of this application provides a data transmission method. The method is used to implement a function on a core network element side. For example, the method may be applied to an SMF network element or a chip in the SMF network element. A specific execution body of the method is not limited in this embodiment of this application. For example, the method is applied to the SMF network element. In the method, the SMF network element obtains first transmission delay information of data packet transmission between an access network element and a terminal device, determines congestion control parameter information based on at least the first transmission delay information, and sends the congestion control parameter information to a data sending network element, where the congestion control parameter information indicates a data amount of a first service sent by the data sending network element to a second UPF network element for the first time after a UPF network element that serves the first service in the data sending network element is switched from a first UPF network element to the second UPF network element.

According to the foregoing method, the SMF network element calculates the congestion control parameter information (for example, first congestion control parameter information and second control parameter information), and sends the congestion control parameter information to the data sending network element (for example, a second edge application server or the terminal device). In this way, after service migration occurs, the data sending network element may determine, based on the congestion control parameter information, the data amount of the first service sent to the second UPF network element for the first time, so that a slow start phase can be accelerated or even skipped, congestion control for re-establishing a transport layer connection can be optimized, data transmission efficiency can be improved, and a data transmission delay can be reduced. In addition, because the congestion control parameter information is determined based on at least the first transmission delay information, the determined congestion control parameter information is more reasonable.

In a possible design, the obtaining first transmission delay information of data packet transmission between an access network element and a terminal device includes: sending first information to the first UPF network element, where the first information is used to request the first transmission delay information; and receiving the first transmission delay information from the first UPF network element; or sending second information to an NWDAF network element, where the second information is used to request the first transmission delay information; and receiving the first transmission delay information from the NWDAF.

In a possible design, the first information includes 5-tuple information of the first service.

In a possible design, the second information includes QoS parameter information of the service and an identifier of the access network element.

In a possible design, the determining congestion control parameter information based on at least the first transmission delay information includes: determining the congestion control parameter information based on a GFBR of the first service and the first transmission delay information.

In a possible design, the determining congestion control parameter information based on at least the first transmission delay information includes: determining the congestion control parameter information based on a GFBR of the first service, the first transmission delay information, and second transmission delay information of data packet transmission between the access network element and the second UPF network element.

In a possible design, the second transmission delay information is determined based on topology information between the access network element and the second UPF network element.

In a possible design, the second transmission delay information is transmission delay lower bound information of data packet transmission between the access network element and the second UPF network element.

In a possible design, the GFBR of the first service is an uplink GFBR, the data sending network element is the terminal device, and the data amount of the first service sent by the data sending network element to the second UPF network element for the first time is a data amount of the first service sent by the terminal device by using the second UPF network element to a second edge application server corresponding to the second UPF network element for the first time.

In a possible design, the sending the congestion control parameter information to a data sending network element includes: sending the congestion control parameter information to the terminal device by using a NAS message; sending the congestion control parameter information to the terminal device by using a first edge application server corresponding to the first UPF network element; or sending the congestion control parameter information to the terminal device by using a first edge enabler server corresponding to a first edge application server.

In a possible design, the GFBR of the first service is a downlink GFBR, the data sending network element is a second edge application server corresponding to the second UPF network element, and the data amount of the first service sent by the data sending network element to the second UPF network element for the first time is a data amount of the first service sent by the second edge application server to the terminal device by using the second UPF network element for the first time.

In a possible design, the sending the congestion control parameter information to a data sending network element includes: sending the congestion control parameter information to the second edge application server by using a first edge application server corresponding to the first UPF network element; or sending the congestion control parameter information to the second edge application server by using a second edge enabler server corresponding to the second edge application server.

According to a fifth aspect, an embodiment of this application provides a data transmission method. The method is used to implement a function on a server side. For example, the method may be applied to a first edge enabler server or a chip in the first edge enabler server. A specific execution body of the method is not limited in this embodiment of this application. For example, the method is applied to the first edge enabler server. In the method, the first edge enabler server receives congestion control parameter information from an SMF network element, where the congestion control parameter information indicates a data amount of a first service sent by a data sending network element to a second UPF network element for the first time after a UPF network element that serves the first service in the data sending network element is switched from a first UPF network element to the second UPF network element; and sends the congestion control parameter information to the data sending network element.

In a possible design, the data sending network element is a terminal device, and the data amount of the first service sent by the data sending network element to the second UPF network element for the first time is a data amount of the first service sent by the terminal device by using the second UPF network element to a second edge application server corresponding to the second UPF network element for the first time.

In a possible design, the sending the congestion control parameter information to the data sending network element includes: sending the congestion control parameter information to the terminal device by using a first edge application server corresponding to the first UPF network element.

In a possible design, the data sending network element is a second edge application server corresponding to the second UPF network element, and the data amount of the first service sent by the data sending network element to the second UPF network element for the first time is a data amount of the first service sent by the second edge application server to a terminal device by using the second UPF network element for the first time.

In a possible design, the sending the congestion control parameter information to the data sending network element includes: sending the congestion control parameter information to the second edge application server by using a first edge application server corresponding to the first UPF network element; or sending the congestion control parameter information to the second edge application server by using a second edge enabler server corresponding to the second edge application server.

According to a sixth aspect, an embodiment of this application provides a data transmission method. The method may be applied to a data sending network element or a chip in the data sending network element. The data sending network element may be a second edge application server or a terminal device. A specific execution body of the method is not limited in this embodiment of this application. For example, the method is applied to the data sending network element. In the method, the data sending network element receives congestion control parameter information from an SMF network element, where the congestion control parameter information indicates a data amount of a first service sent by the data sending network element to a second UPF network element for the first time after a UPF network element that serves the first service in the data sending network element is switched from a first UPF network element to the second UPF network element; and sends a data packet of the first service based on the congestion control parameter information.

In a possible design, the data sending network element is a second edge application server corresponding to the second UPF network element, and the data amount of the first service sent by the data sending network element to the second UPF network element for the first time is a data amount of the first service sent by the second edge application server to a terminal device by using the second UPF network element for the first time.

In a possible design, the receiving first congestion control parameter information from an SMF network element includes: receiving, from the SMF network element, the congestion control parameter information sent by a first edge application server corresponding to the first UPF network element; or receiving, from the SMF network element, the congestion control parameter information sent by a second edge enabler server corresponding to the second edge application server.

In a possible design, the data sending network element is a terminal device, and the data amount of the first service sent by the data sending network element to the second UPF network element for the first time is a data amount of the first service sent by the second edge application server to the terminal device by using the second UPF network element for the first time.

In a possible design, the receiving congestion control parameter information from an SMF network element includes: receiving a NAS message from the SMF network element, where the NAS message includes the congestion control parameter information; receiving, from the SMF network element, the congestion control parameter information sent by a first edge application server corresponding to the first UPF network element; or receiving, from the SMF network element, the congestion control parameter information sent by a first edge enabler server corresponding to a first edge application server.

It should be noted that the methods described in the fifth aspect and the sixth aspect correspond to the method described in the fourth aspect. Therefore, for beneficial effects of related technical features in the methods described in the fifth aspect and the sixth aspect, refer to the fourth aspect. Details are not described again.

According to a seventh aspect, an embodiment of this application provides a data transmission method. The method is used to implement a function on a core network element side. For example, the method may be applied to an SMF network element or a chip in the SMF network element. A specific execution body of the method is not limited in this embodiment of this application. For example, the method is applied to the SMF network element. In the method, the SMF network element obtains first transmission delay information of data packet transmission between an access network element and a terminal device, and sends third information to a data sending network element, where the third information includes the first transmission delay information, the third information is used to determine congestion control parameter information, and the congestion control parameter information indicates a data amount of a first service sent by the data sending network element to a second UPF network element for the first time after a UPF network element that serves the first service in the data sending network element is switched from a first UPF network element to the second UPF network element.

According to the foregoing method, the SMF network element may send the third information to the data sending network element (for example, a second edge application server or the terminal device), and the data sending network element calculates the congestion control parameter information based on the third information. In this way, after service migration occurs, the data sending network element may determine, based on the congestion control parameter information, the data amount of the first service sent to the second UPF network element for the first time, so that a slow start phase can be accelerated or even skipped, congestion control for re-establishing a transport layer connection can be optimized, data transmission efficiency can be improved, and a data transmission delay can be reduced. In addition, because the congestion control parameter information is determined based on at least the first transmission delay information, the determined congestion control parameter information is more reasonable.

In a possible design, the obtaining first transmission delay information of data packet transmission between an access network element and a terminal device includes: sending first information to the first UPF network element, where the first information is used to request the first transmission delay information; and receiving the first transmission delay information from the first UPF network element; or sending second information to an NWDAF network element, where the second information is used to request the first transmission delay information; and receiving the first transmission delay information from the NWDAF.

In a possible design, the first information includes 5-tuple information of the first service.

In a possible design, the second information includes quality of service QoS parameter information of the service and an identifier of the access network element.

In a possible design, the third information further includes a GFBR of the first service; or the third information further includes a GFBR of the first service and second transmission delay information of data packet transmission between the access network element and the second UPF network element.

In a possible design, the second transmission delay information is determined based on topology information between the access network element and the second UPF network element.

In a possible design, the second transmission delay information is transmission delay lower bound information of data packet transmission between the access network element and the second UPF network element.

In a possible design, the GFBR of the first service is an uplink GFBR, the data sending network element is the terminal device, and the data amount of the first service sent by the data sending network element to the second UPF network element for the first time is a data amount of the first service sent by the terminal device by using the second UPF network element to a second edge application server corresponding to the second UPF network element for the first time.

In a possible design, the sending third information to a data sending network element includes: sending the third information to the terminal device by using a NAS message; sending the third information to the terminal device by using a first edge application server corresponding to the first UPF network element; or sending the third information to the terminal device by using a first edge enabler server corresponding to a first edge application server.

In a possible design, the GFBR of the first service is a downlink GFBR, the data sending network element is a second edge application server corresponding to the second UPF network element, and the data amount of the first service sent by the data sending network element to the second UPF network element for the first time is a data amount of the first service sent by the second edge application server to the terminal device by using the second UPF network element for the first time.

In a possible design, the sending congestion control parameter information to a data sending network element includes: sending the third information to the second edge application server by using a first edge application server corresponding to the first UPF network element; or sending the third information to the second edge application server by using a second edge enabler server corresponding to the second edge application server.

According to an eighth aspect, an embodiment of this application provides a data transmission method. The method is used to implement a function on a server side. For example, the method may be applied to a first edge enabler server or a chip in the first edge enabler server. A specific execution body of the method is not limited in this embodiment of this application. For example, the method is applied to the first edge enabler server. The first edge enabler server receives third information from an SMF network element, where the third information includes first transmission delay information of data packet transmission between an access network element and a terminal device, the third information is used to determine congestion control parameter information, and the congestion control parameter information indicates a data amount of a first service sent by a data sending network element to a second UPF network element for the first time after a UPF network element that serves the first service in the data sending network element is switched from a first UPF network element to the second UPF network element; and sends the third information to the data sending network element.

In a possible design, the data sending network element is the terminal device, and the data amount of the first service sent by the data sending network element to the second UPF network element for the first time is a data amount of the first service sent by the terminal device by using the second UPF network element to a second edge application server corresponding to the second UPF network element for the first time.

In a possible design, the sending the third information to the data sending network element includes: sending the third information to the terminal device by using a first edge application server corresponding to the first UPF network element.

In a possible design, the third information further includes an uplink GFBR of the first service; or the third information further includes an uplink GFBR of the first service and second transmission delay information of data packet transmission between the access network element and the second UPF network element.

In a possible design, the data sending network element is a second edge application server corresponding to the second UPF network element, and the data amount of the first service sent by the data sending network element to the second UPF network element for the first time is a data amount of the first service sent by the second edge application server to the terminal device by using the second UPF network element for the first time.

In a possible design, the sending the third information to the data sending network element includes: sending the third information to the second edge application server by using a first edge application server corresponding to the first UPF network element; or sending the third information to the second edge application server by using a second edge enabler server corresponding to the second edge application server.

In a possible design, the third information further includes a downlink GFBR of the first service; or the third information further includes a downlink GFBR of the first service and second transmission delay information of data packet transmission between the access network element and the second UPF network element.

According to a ninth aspect, an embodiment of this application provides a data transmission method. The method may be applied to a data sending network element or a chip in the data sending network element. The data sending network element may be a second edge application server or a terminal device. A specific execution body of the method is not limited in this embodiment of this application. For example, the method is applied to the data sending network element. The data sending network element receives third information from an SMF network element, where the third information includes first transmission delay information of data packet transmission between an access network element and a terminal device, the third information is used to determine congestion control parameter information, and the congestion control parameter information indicates a data amount of a first service sent by the data sending network element to a second UPF network element for the first time after a UPF network element that serves the first service in the data sending network element is switched from a first UPF network element to the second UPF network element; and sends a data packet of the first service based on the congestion control parameter information.

In a possible design, the data sending network element is a second edge application server corresponding to the second UPF network element, and the data amount of the first service sent by the data sending network element to the second UPF network element for the first time is a data amount of the first service sent by the second edge application server to the terminal device by using the second UPF network element for the first time.

In a possible design, the receiving third information from an SMF network element includes: receiving, from the SMF network element, the third information sent by a first edge application server corresponding to the first UPF network element; or receiving, from the SMF network element, the third information sent by a second edge enabler server corresponding to the second edge application server.

In a possible design, the third information further includes a downlink GFBR of the first service; or the third information further includes a downlink GFBR of the first service and second transmission delay information of data packet transmission between the access network element and the second UPF network element.

In a possible design, the data sending network element is the terminal device, and the data amount of the first service sent by the data sending network element to the second UPF network element for the first time is a data amount of the first service sent by the terminal device by using the second UPF network element to a second edge application server corresponding to the second UPF network element for the first time.

In a possible design, the receiving third information from an SMF network element includes: receiving the third information from the SMF network element by using a NAS message; receiving, from the SMF network element, the third information sent by a first edge application server corresponding to the first UPF network element; or receiving, from the SMF network element, the third information sent by a first edge enabler server corresponding to a first edge application server.

In a possible design, the receiving, from the SMF network element, the third information sent by a first edge enabler server corresponding to a first edge application server includes: An edge enabler client in the terminal device receives, from the SMF network element, the third information sent by the first edge enabler server, and sends the third information to an application client in the terminal device; or an edge enabler client in the terminal device receives, from the SMF network element, the third information sent by the first edge enabler server, determines the congestion control parameter information based on the third information, and sends the congestion control parameter information to an application client.

In a possible design, the third information further includes an uplink GFBR of the first service; or the third information further includes an uplink GFBR of the first service and second transmission delay information of data packet transmission between the access network element and the second UPF network element.

It should be noted that the methods described in the eighth aspect and the ninth aspect correspond to the method described in the seventh aspect. Therefore, for beneficial effects of related technical features in the methods described in the eighth aspect and the ninth aspect, refer to the seventh aspect. Details are not described again.

According to a tenth aspect, an embodiment of this application provides a communication apparatus. The communication apparatus may be a core network element (for example, an SMF network element) or a chip disposed in the core network element. The communication apparatus has a function of implementing any one of the first aspect, the fourth aspect, and the seventh aspect. For example, the communication apparatus includes a corresponding module, unit, or means (means) for performing steps in any one of the first aspect, the fourth aspect, and the seventh aspect. The function, the unit, or the means may be implemented by using software, implemented by using hardware, or implemented by executing corresponding software by hardware.

In a possible design, the communication apparatus includes a processing unit and a communication unit. The communication unit may be configured to: receive and send a signal, to implement communication between the communication apparatus and another apparatus. For example, the communication unit is configured to receive configuration information from a terminal device. The processing unit may be configured to perform some internal operations of the communication apparatus.

In another possible design, the communication apparatus includes a processor, and may further include a transceiver. The transceiver is configured to: receive and send a signal. The processor executes program instructions to complete the method in any one of the possible designs or implementations of the first aspect, the fourth aspect, and the seventh aspect. The communication apparatus may further include one or more memories. The memory is configured to be coupled to the processor. The memory may store a necessary computer program or necessary instructions for implementing the function in any one of the first aspect, the fourth aspect, and the seventh aspect. The processor may execute the computer program or the instructions stored in the memory. When the computer program or the instructions are executed, the communication apparatus is enabled to implement the method in any one of the possible designs or implementations of the first aspect, the fourth aspect, and the seventh aspect.

In another possible design, the communication apparatus includes a processor, and the processor may be configured to be coupled to a memory. The memory may store a necessary computer program or necessary instructions for implementing the function in any one of the first aspect, the fourth aspect, and the seventh aspect. The processor may execute the computer program or the instructions stored in the memory. When the computer program or the instructions are executed, the communication apparatus is enabled to implement the method in any one of the possible designs or implementations of the first aspect, the fourth aspect, and the seventh aspect.

In another possible design, the communication apparatus includes a processor and an interface circuit. The processor is configured to: communicate with another apparatus by using the interface circuit, and perform the method in any of the possible designs or implementations of the first aspect, the fourth aspect, and the seventh aspect.

According to an eleventh aspect, an embodiment of this application provides a communication apparatus. The communication apparatus may be a server (for example, a first edge enabler server) or a chip disposed in the server. The communication apparatus has a function of implementing the second aspect, the fifth aspect, and the eighth aspect. For example, the communication apparatus includes a corresponding module, unit, or means for performing steps in any one of the second aspect, the fifth aspect, and the eighth aspect. The function, the unit, or the means may be implemented by using software, implemented by using hardware, or implemented by executing corresponding software by hardware.

In a possible design, the communication apparatus includes a processing unit and a communication unit. The communication unit may be configured to: receive and send a signal, to implement communication between the communication apparatus and another apparatus. For example, the communication unit is configured to receive configuration information from a terminal device. The processing unit may be configured to perform some internal operations of the communication apparatus.

In another possible design, the communication apparatus includes a processor, and may further include a transceiver. The transceiver is configured to: receive and send a signal. The processor executes program instructions to complete the method in any one of the possible designs or implementations of the second aspect, the fifth aspect, and the eighth aspect. The communication apparatus may further include one or more memories. The memory is configured to be coupled to the processor. The memory may store a necessary computer program or necessary instructions for implementing the function in any one of the second aspect, the fifth aspect, and the eighth aspect. The processor may execute the computer program or the instructions stored in the memory. When the computer program or the instructions are executed, the communication apparatus is enabled to implement the method in any one of the possible designs or implementations of the second aspect, the fifth aspect, and the eighth aspect.

In another possible design, the communication apparatus includes a processor, and the processor may be configured to be coupled to a memory. The memory may store a necessary computer program or necessary instructions for implementing the function in any one of the second aspect, the fifth aspect, and the eighth aspect. The processor may execute the computer program or the instructions stored in the memory. When the computer program or the instructions are executed, the communication apparatus is enabled to implement the method in any one of the possible designs or implementations of the second aspect, the fifth aspect, and the eighth aspect.

In another possible design, the communication apparatus includes a processor and an interface circuit. The processor is configured to: communicate with another apparatus by using the interface circuit, and perform the method in any of the possible designs or implementations of the second aspect, the fifth aspect, and the eighth aspect.

According to a twelfth aspect, an embodiment of this application provides a communication apparatus. The communication apparatus may be a data sending network element (for example, a second edge application server or a terminal device) or a chip disposed in the data sending network element. The communication apparatus has a function of implementing the third aspect, the sixth aspect, and the ninth aspect. For example, the communication apparatus includes a corresponding module, unit, or means for performing steps in any one of the third aspect, the sixth aspect, and the ninth aspect. The function, the unit, or the means may be implemented by using software, implemented by using hardware, or implemented by executing corresponding software by hardware.

In a possible design, the communication apparatus includes a processing unit and a communication unit. The communication unit may be configured to: receive and send a signal, to implement communication between the communication apparatus and another apparatus. For example, the communication unit is configured to receive configuration information from a terminal device. The processing unit may be configured to perform some internal operations of the communication apparatus.

In another possible design, the communication apparatus includes a processor, and may further include a transceiver. The transceiver is configured to: receive and send a signal. The processor executes program instructions to complete the method in any one of the possible designs or implementations of the third aspect, the sixth aspect, and the ninth aspect. The communication apparatus may further include one or more memories. The memory is configured to be coupled to the processor. The memory may store a necessary computer program or necessary instructions for implementing the function in any one of the third aspect, the sixth aspect, and the ninth aspect. The processor may execute the computer program or the instructions stored in the memory. When the computer program or the instructions are executed, the communication apparatus is enabled to implement the method in any one of the possible designs or implementations of the third aspect, the sixth aspect, and the ninth aspect.

In another possible design, the communication apparatus includes a processor, and the processor may be configured to be coupled to a memory. The memory may store a necessary computer program or necessary instructions for implementing the function in any one of the third aspect, the sixth aspect, and the ninth aspect. The processor may execute the computer program or the instructions stored in the memory. When the computer program or the instructions are executed, the communication apparatus is enabled to implement the method in any one of the possible designs or implementations of the third aspect, the sixth aspect, and the ninth aspect.

In another possible design, the communication apparatus includes a processor and an interface circuit. The processor is configured to: communicate with another apparatus by using the interface circuit, and perform the method in any of the possible designs or implementations of the third aspect, the sixth aspect, and the ninth aspect.

It may be understood that, in the tenth aspect, the eleventh aspect, or the twelfth aspect, the processor may be implemented by using hardware, or may be implemented by using software. When the processor is implemented by using the hardware, the processor may be a logic circuit, an integrated circuit, or the like. When the processor is implemented by using the software, the processor may be a general-purpose processor, and is implemented by reading software code stored in the memory. In addition, there may be one or more processors, and one or more memories. The memory may be integrated with the processor, or the memory and the processor are disposed separately. In a specific implementation process, the memory and the processor may be integrated into one chip, or may be disposed on different chips. A type of the memory and a manner in which the memory and the processor are disposed are not limited in embodiments of this application.

According to a thirteenth aspect, an embodiment of this application provides a communication system. The communication system includes the SMF network element in the first aspect, the server (for example, the first edge enabler server or the first edge application server) in the second aspect, and the data sending network element in the third aspect; the communication system includes the SMF network element in the fourth aspect, the server (for example, the first edge enabler server) in the fifth aspect, and the data sending network element in the sixth aspect; or the communication system includes the SMF network element in the seventh aspect, the server (for example, the first edge enabler server) in the eighth aspect, and the data sending network element in the ninth aspect.

According to a fourteenth aspect, this application provides a computer-readable storage medium, where the computer-readable storage medium stores computer-readable instructions, and when a computer reads and executes the computer-readable instructions, the computer is enabled to perform the method in any one of the possible designs in the first aspect to the ninth aspect.

According to a fifteenth aspect, this application provides a computer program product, and when a computer reads and executes the computer program product, the computer is enabled to perform the method in any one of the possible designs in the first aspect to the ninth aspect.

According to a sixteenth aspect, this application provides a chip, where the chip includes a processor, and the processor is coupled to a memory and is configured to: read and execute a software program stored in the memory, to implement the method in any one of the possible designs in the first aspect to the ninth aspect.

These aspects or other aspects of this application are more concise and understandable in descriptions of the following embodiments.

### BRIEF DESCRIPTION OF DRAWINGS

FIG. 1A and FIG. 1B are schematic diagrams of network architectures of two 5G communication systems according to embodiments of this application;
FIG. 2A is a schematic diagram of an application layer architecture of edge computing according to an embodiment of this application;
FIG. 2B is a schematic diagram of a network architecture of edge computing according to an embodiment of this application;
FIG. 3A, FIG. 3B, and FIG. 3C are schematic diagrams of three possible migration scenarios according to embodiments of this application;
FIG. 4A, FIG. 4B, FIG. 4C, and FIG. 4D are schematic diagrams of congestion control according to embodiments of this application;
FIG. 5 is a schematic flowchart corresponding to a data transmission method according to Embodiment 1 of this application;
FIG. 6 is a schematic flowchart corresponding to a data transmission method according to Embodiment 2 of this application;
FIG. 7 is a schematic flowchart corresponding to a data transmission method according to Embodiment 3 of this application;
FIG. 8 is a block diagram of a possible example of an apparatus according to an embodiment of this application;
FIG. 9 is a schematic diagram of a structure of a core network element according to an embodiment of this application;
FIG. 10 is a schematic diagram of a structure of a server according to an embodiment of this application; and
FIG. 11 is a schematic diagram of a structure of a terminal device according to an embodiment of this application.

### DESCRIPTION OF EMBODIMENTS

The following describes technical solutions in embodiments of this application with reference to the accompanying drawings in embodiments of this application.

First, related technical concepts in embodiments of this application are described.

### 1. Network architecture of a 5G communication system

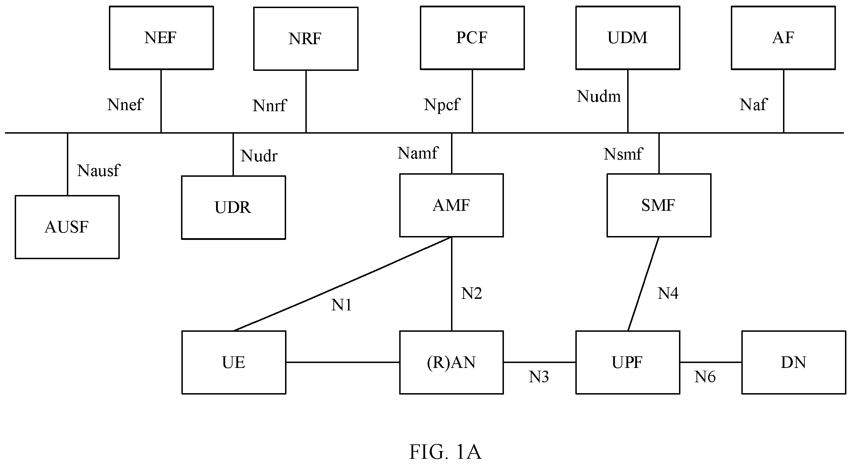

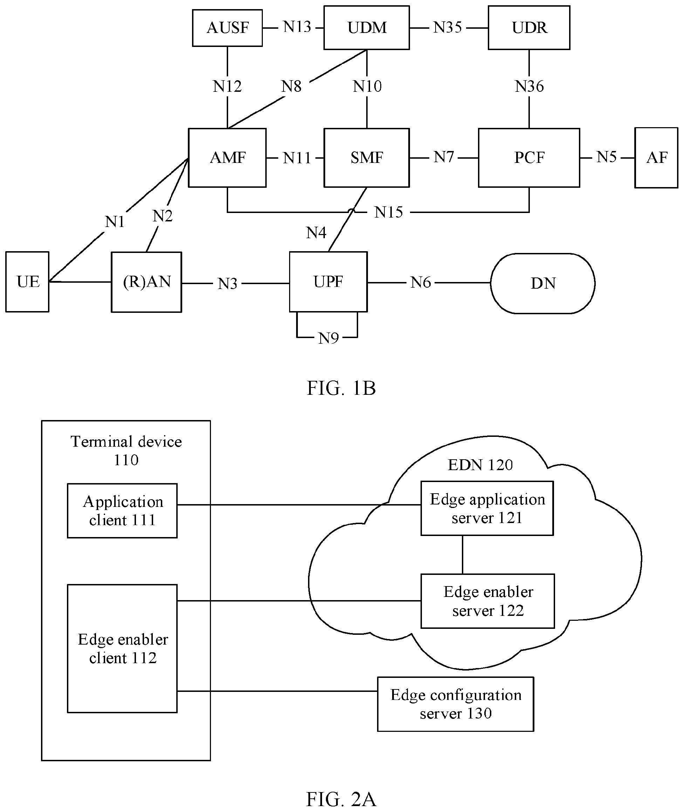

FIG. 1A and FIG. 1B are schematic diagrams of two network architectures according to embodiments of this application. The network architecture shown in FIG. 1A is a network architecture of a 5^{th} generation (5^{th} generation, 5G) communication system based on a service-oriented interface, and the network architecture shown in FIG. 1B is a network architecture of a 5G communication system based on a point-to-point interface. As shown in FIG. 1A or FIG. 1B, a terminal device (which may also be referred to as user equipment (user equipment, UE)) may access a wireless network, to obtain a service of an external network (for example, a data network (data network, DN)) by using the wireless network, or communicate with another device by using the wireless network. The wireless network may also be referred to as an operator network, and may include a (radio) access network ((radio) access network, (R)AN) and a core network (core network, CN). The (R)AN (described as a RAN below) is configured to connect the terminal device to the wireless network, and the CN is configured to: manage the terminal device and provide a gateway for communicating with the DN.

The following separately describes the terminal device, the RAN, the CN, and the DN in detail.

### (1) Terminal device

The terminal device includes a device that provides a user with voice and/or data connectivity. For example, the terminal device may include a handheld device with a wireless connection function or a processing device connected to a radio modem. The terminal device may communicate with the core network by using the radio access network, and exchange voice and/or data with the RAN. The terminal device may include a wireless terminal device, a mobile terminal device, a device-to-device (device-to-device, D2D) terminal device, a vehicle-to-everything (vehicle-to-everything, V2X) terminal device, a machine-to-machine/machine type communication (machine-to-machine/machine type communication, M2M/MTC) terminal device, an internet of things (internet of things, IoT) terminal device, a subscriber unit, a subscriber station, a mobile station, a remote station, an access point (access point, AP), a remote terminal, an access terminal, a user terminal, a user agent, user equipment, or the like. For example, the terminal device may include a mobile phone (or referred to as a "cellular" phone), a computer with a mobile terminal device, or a portable, pocket-sized, handheld, or computer built-in mobile apparatus. For example, the terminal device may be a device such as a personal communications service (personal communications service, PCS) phone, a cordless telephone set, a session initiation protocol (session initiation protocol, SIP) phone, a wireless local loop (wireless local loop, WLL) station, or a personal digital assistant (personal digital assistant, PDA). The terminal device may alternatively include a limited device, for example, a device with low power consumption, a device with a limited storage capability, or a device with a limited computing capability. For example, the terminal device includes an information sensing device such as a barcode, radio frequency identification (radio frequency identification, RFID), a sensor, a global positioning system (global positioning system, GPS), or a laser scanner.

### (2) RAN

The RAN may include one or more access network elements, and an interface between the access network element and the terminal device may be a Uu interface (or referred to as an air interface). Certainly, in future communication, names of the interfaces may remain unchanged, or may be replaced with other names. This is not limited in this application.

The access network element is a node or a device that connects the terminal device to the wireless network, and the access network element may also be referred to as a radio access network element or an access network element. The access network element includes, for example, but is not limited to, a new generation NodeB (generation NodeB, gNB) in a 5G communication system, an evolved NodeB (evolved NodeB, eNB), a next generation evolved NodeB (next generation eNB, ng-eNB), and a home evolved NodeB ((home evolved NodeB, HeNB) or (home NodeB, HNB)). The access network element may alternatively be a module or a unit that completes a function of a base station. For example, the access network element includes a central unit (central unit, CU) and a distributed unit (distributed unit, DU). In a possible network structure, the CU may be configured to support communication in protocols such as radio resource control (radio resource control, RRC), a packet data convergence protocol (packet data convergence protocol, PDCP), and a service data adaptation protocol (service data adaptation protocol, SDAP). The DU may be configured to support communication in a radio link control (radio link control, RLC) layer protocol, a medium access control (medium access control, MAC) layer protocol, and a physical layer protocol. A specific technology and a specific device form that are used by the access network element are not limited in embodiments of this application.

### (3) CN

The CN may include one or more core network elements. For example, the CN may include an authentication server function (authentication server function, AUSF) network element, a network exposure function (network exposure function, NEF) network element, a policy control function (policy control function, PCF) network element, a unified data management (unified data management, UDM) network element, a unified data repository (unified data repository, UDR), a network repository function (network repository function, NRF) network element, an application function (application function, AF) network element, an access and mobility management function (access and mobility management function, AMF) network element, a session management function (session management function, SMF) network element, and a user plane function (user plane function, UPF) network element.

The AMF network element is a control plane network element provided by the operator network, and is responsible for access control and mobility management for the terminal device to access the operator network, for example, including user location update, user network registration, and user handover.

The SMF network element is responsible for session-related functions such as session management (for example, session establishment, modification, and release), internet protocol (internet protocol, IP) address allocation and management, UPF network element selection and control, service and session continuity (service and session continuity, SSC) mode selection, and roaming in a mobile network.

The UPF network element is a gateway for communication between the operator network and the DN. The UPF network element includes functions related to a user plane, for example, data packet routing and transmission, packet detection, quality of service (quality of service, QoS) processing, lawful interception, uplink packet detection, and downlink data packet storage.

The PCF network element is responsible for generating a UE access policy and a QoS flow control policy.

The UDM network element is responsible for storing information such as a subscriber permanent identifier (subscriber permanent identifier, SUPI) and subscription data of a subscriber in the operator network.

The AF network element is a function network element that provides various services, can interact with the core network by using another network element, and can interact with a policy management framework to perform policy management.

The AUSF network element is responsible for authorizing a user to access a 5G network. The NEF network element exposes a 5G network capability and event and receives related external messages. The UDR provides a capability of storing related data such as subscription data, policy data, and capability exposure. The NRF network element provides registration and discovery capabilities for network elements in the 5G network.

In addition, although not shown, the CN may further include another possible network element, for example, a network data analytics function (network data analytics function, NWDAF) network element. The NWDAF network element may implement data collection and data analytics result feedback by interacting with the core network element (for example, the SMF network element) and an operation and maintenance management network element. The operation and maintenance management network element may be an operation, administration and maintenance (operation, administration and maintenance, OAM) network element.

### (4) DN

The DN may also be referred to as a packet data network (packet data network, PDN), and is a network located outside the operator network. The DN is identified by a data network name (data network name, DNN) in the 5G network. A typical DN may include the internet, an IP multimedia service (IP multimedia service, IMS) network, and the like.

In addition, it should be noted that: (1) Npcf, Nudm, Naf, Namf, Nsmf, N1, N2, N3, N4, N6, and the like in FIG. 1A are interface sequence numbers, and N1, N2, N3, N4, N5, N6, N7, N8, N9, N10, N36, and the like in FIG. 1B are interface sequence numbers. For meanings of the interface sequence numbers, refer to meanings defined in a related standard protocol. This is not limited herein.

(2) FIG. 1A and FIG. 1B each use a 5G communication system as an example for illustration. Embodiments of this application may be further applicable to another possible communication system, for example, a long term evolution (long term evolution, LTE) communication system or a future 6^{th} generation (6^{th} generation, 6G) communication system.

(3) The network element in embodiments of this application may also be referred to as an entity or a functional entity. For example, the AMF network element may also be referred to as an AMF entity or an AMF apparatus, and the SMF network element may also be referred to as an SMF entity or an SMF apparatus. The network element may be a network element in a hardware device, a software function running on dedicated hardware, or a virtualization function instantiated on a platform (for example, a cloud platform). Optionally, the network element may be implemented by one device, or may be jointly implemented by a plurality of devices, or may be a functional module in a device. This is not specifically limited in embodiments of this application.

(4) For the terminal device, the access network element, and the core network element (for example, the SMF network element or the UPF network element) in embodiments of this application, where the terminal device is used as an example, an apparatus configured to implement a function of the terminal device may be a terminal device, or may be an apparatus that can support the terminal device in implementing the function, for example, a chip system or a combined component or device that can implement the function of the terminal device. The apparatus may be installed in the terminal device. In embodiments of this application, the chip system may include a chip, or may include a chip and another discrete component. The technical solutions provided in embodiments of this application are described by using an example in which the apparatus configured to implement the function of the terminal device is the terminal device.

### 2. Edge computing

A conventional centralized deployment manner is increasingly difficult to support a rapidly increasing mobile service traffic model (where for example, in a network in which an anchor gateway is deployed in a centralized manner, increased traffic is finally concentrated at the anchor gateway and a core equipment room, and this imposes increasingly high requirements on backhaul network bandwidth, equipment room throughput, and gateway specification; for another example, a long-distance backhaul network and a complex transmission environment from an access network to an anchor gateway cause a large delay and jitter of data packet transmission). Therefore, edge computing is proposed currently. To be specific, edge computing is to move a service processing capability to a network edge, to expect to be closer to a user to provide a faster service for the user and achieve better network performance.

FIG. 2A is a schematic diagram of an application layer architecture of edge computing. As shown in FIG. 2A, the application layer architecture includes a terminal device 110, an edge data network (edge data network, EDN) 120, and an edge configuration server (edge configuration server, ECS) 130. The EDN 120 includes an edge application server (edge application server, EAS) 121 and an edge enabler server (edge enabler server, EES) 122. The terminal device 110 includes an application client (application client, AC) 111 and an edge enabler client (edge enabler client, EEC) 112. The following describes each part in detail.

EDN 120: In an understanding, the EDN corresponds to one data network, is a special local data network (local DN), includes an edge enabler function, and may be identified by a data network name (data network name, DNN). Another understanding of the EDN is that the EDN is a peer concept of a central cloud. The EDN is a local data center (namely, a geographical location concept), may be determined by using a data network access identifier (DN access identifier, DNAI), and may include a plurality of local data networks.

EAS 121: The EAS may be an application server deployed in the EDN, or may be an instance (instance) that one server application program (for example, social media software, augmented reality (augmented reality, AR), or virtual reality (virtual reality, VR)) is deployed and running in the EDN. One or more edge application servers may be deployed in one or more EDNs for one application. Edge application servers deployed and running in different EDNs may be considered as different edge application servers of one application, and may share a domain name or use a domain name different from that used by an application deployed on the cloud. The domain name may be a fully qualified domain name (fully qualified domain name, FQDN). It may be understood that the edge application server may also be referred to as an edge application, an application instance, an edge application instance, a multi-access edge computing (multi-access edge computing, MEC) application (server), or the like.

Application client 111: The application client is a peer application instance of an edge application on a terminal device side, and the application client is used by an application user (user) to obtain an application service from the application server. The application client is a client program of an application on the terminal device side. The application client may be connected to an application server on the cloud to obtain the application service, or may be connected to the edge application server deployed and running in one or more EDNs to obtain the application service.

EES 122: The EES is deployed in the EDN, may provide some enabler capabilities for the application instance deployed in the EDN, to better support application deployment in edge computing and support registration of the edge application and authentication and authorization of the terminal device, provide IP address information and the like of the application instance for the terminal device, to further support obtaining an identifier and the IP address information of the application instance, and further send the identifier and the IP address information of the application instance to an edge configuration server. Usually, the edge application server is registered with one EES, or information about one edge application server is configured on one EES by using a management system. The EES is referred to as an EES associated with or corresponding to the edge application server. The EES controls/manages the edge application server registered/configured on the EES. For example, the EES may be configured to perform a function of an AF network element, in other words, the EES may act as the AF network element. The EES and the AF network element in this embodiment of this application may be replaced with each other.

EEC 112: The EEC is a peer application instance of the EES on the terminal device side. The EEC is configured to: register EEC information and application client information with the EES, perform security authentication and authorization, obtain IP address information of the edge application server from the EES, and provide an edge computing enabler capability for the application client. The EEC may be a sub-functional module implemented in the AC, a module integrated in an operating system, or an independent application program.

ECS 130: The ECS is responsible for EDN configuration, for example, providing EES information for the terminal device. The ECS may further directly provide application instance information for the terminal device, and interact with a DNS of the application to obtain the application instance information, or may further obtain and store the IP address information of the application instance from another functional entity.

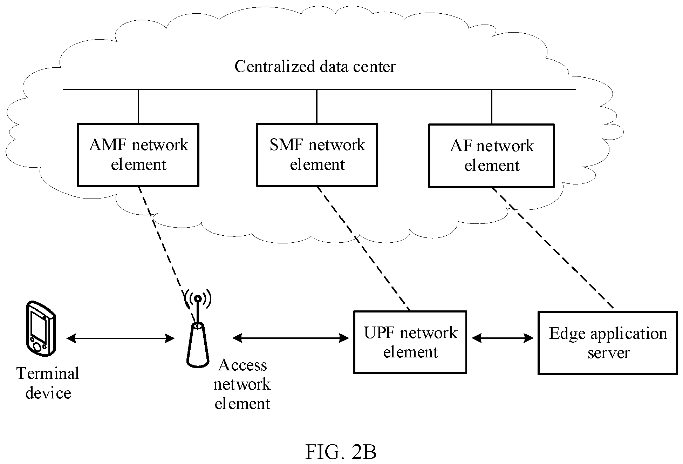

Based on the foregoing descriptions, after edge computing is introduced into the 5G communication system, the UPF network element and the edge application server may be deployed at the network edge. FIG. 2B is a schematic diagram of a possible network architecture of edge computing. As shown in FIG. 2B, a centralized data center may include a control plane network element in a 5G communication system, for example, an AMF network element, an SMF network element, or an AF network element. The AMF network element, the SMF network element, the AF network element, and the like may each be configured to perform the foregoing control plane function. Details are not described again. For example, each edge application server may correspond to one AF network element. The AF network element may be configured to perform a procedure related to a control plane, for example, interact with the SMF network element. The edge application server may perform a procedure related to a user plane. During actual deployment, the AF network element corresponding to the edge application server may be deployed in the edge server, or may be deployed in a device outside the edge server. This is not specifically limited. In this embodiment of this application, an example in which the AF network element is deployed in the device outside the edge server is used for description.

As shown in FIG. 2B, in an uplink direction, a terminal device may transmit, by using an access network element, a data packet to a UPF network element deployed at a network edge, and the UPF network element may transmit the data packet to the edge application server. In a downlink direction, the edge application server may transmit a data packet to a UPF network element deployed at a network edge, and the UPF network element may transmit the data packet to a terminal device by using an access network element.

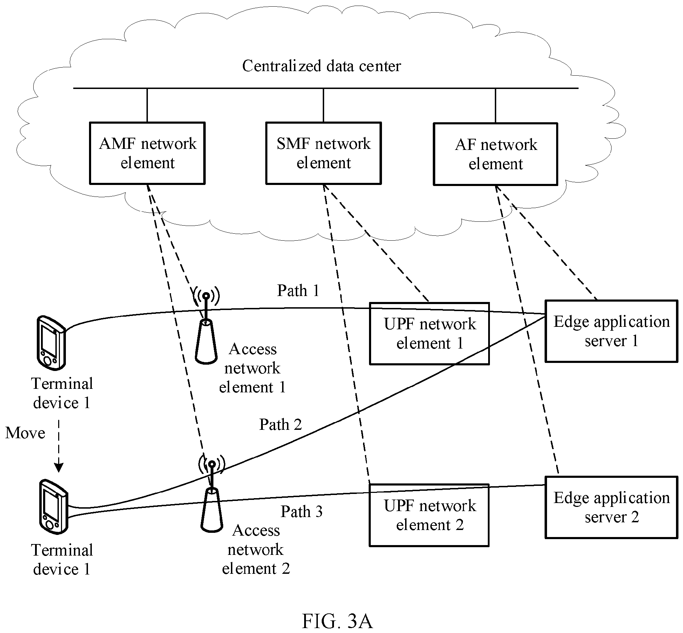

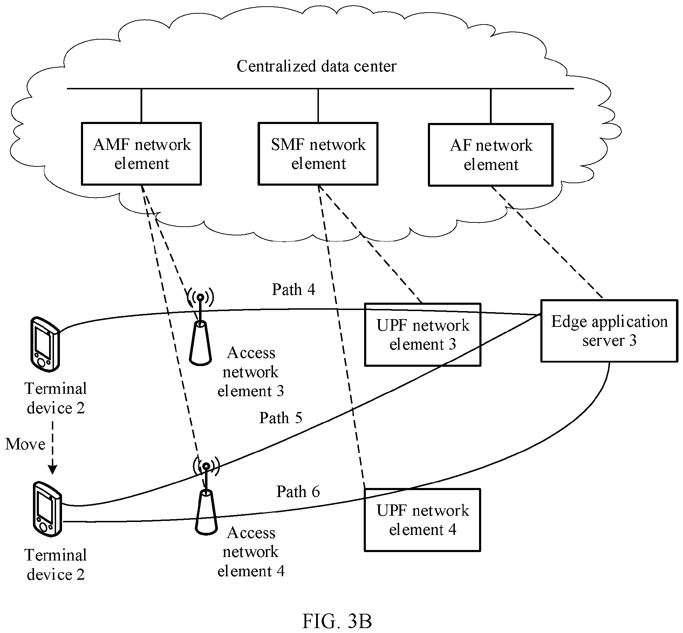

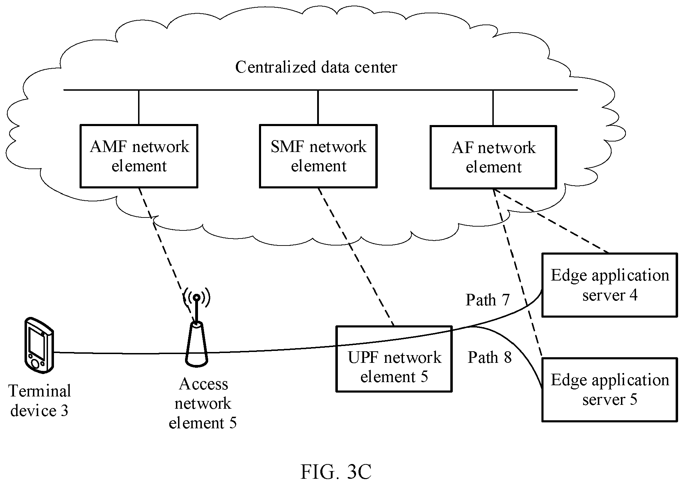

For example, the UPF network element deployed at the network edge may correspond to one edge application server. As shown in FIG. 3A, a UPF network element 1 corresponds to an edge application server 1, and a UPF network element 2 corresponds to an edge application server 2. For example, if both the UPF network element 1 and the edge application server 1 are deployed for an area 1, it may be considered that the UPF network element 1 corresponds to the edge application server 1; if both the UPF network element 2 and the edge application server 2 are deployed for an area 2, it may be considered that the UPF network element 2 corresponds to the edge application server 2. Alternatively, one edge application server may correspond to a plurality of UPF network elements deployed at the network edge. As shown in FIG. 3B, an edge application server 3 corresponds to a UPF network element 3 and a UPF network element 4. For example, if the edge application server 3 is deployed for an area 3, where the area 3 includes a sub-area 3a and a sub-area 3b, the UPF network element 3 is deployed for the sub-area 3a, and the UPF network element 4 is deployed for the sub-area 3b, it may be considered that the edge application server 3 corresponds to the UPF network element 3 and the UPF network element 4. Alternatively, the UPF network element deployed at the network edge may correspond to a plurality of edge application servers. As shown in FIG. 3C, a UPF network element 5 corresponds to an edge application server 4 and an edge application server 5. In this case, the edge application server 4 and the edge application server 5 may be understood as a server cluster.

When a service of the terminal device is processed in an edge computing manner, the service of the terminal device may need to be migrated due to a plurality of reasons. For example, the terminal device has mobility. Therefore, as the terminal device moves, the service of the terminal device may need to be migrated. For another example, to implement load balancing between the edge application servers, the service of the terminal device may need to be migrated. The following describes three possible migration scenarios with reference to FIG. 3A to FIG. 3C. For FIG. 3A to FIG. 3C, it should be noted that, FIG. 3A is used as an example, and FIG. 3A is merely a simple example. During specific implementation, the edge application server 1 may correspond to an AF network element 1, and the edge application server 1 may correspond to an AF network element 2.

### (1) Migration scenario 1

Refer to FIG. 3A, an uplink direction is used as an example. A terminal device 1 may transmit a data packet of a service 1 to the UPF network element 1 by using an access network element (for example, an access network element 1), so that the UPF network element 1 can transmit the data packet to the edge application server 1. In this case, a data transmission path of the service 1 is: the terminal device 1---the access network element 1---the UPF network element 1---the edge application server 1. For ease of description, the data transmission path is referred to as a path 1. As the terminal device 1 moves, the terminal device 1 may move from a coverage area of the access network element 1 to a coverage area of an access network element 2. In this case, a data transmission path of the service 1 is: the terminal device 1---the access network element 2-the UPF network element 1---the edge application server 1. For ease of description, the data transmission path is referred to as a path 2.

However, the terminal device 1 may move out of a service range of the UPF network element 1, or because the terminal device 1 moves, the path 2 is not a better path for transmitting data of the service 1. Therefore, an appropriate data transmission path needs to be planned for the service 1 of the terminal device 1, and migration needs to be performed. For example, the data transmission path planned for the service 1 of the terminal device 1 is: the terminal device 1---the access network element 2---the UPF network element 2---the edge application server 2. For ease of description, the data transmission path is referred to as a path 3. In this way, the service 1 of the terminal device 1 may be migrated from the path 2 to the path 3, and the data is transmitted by using the path 3.

It can be learned that, in Migration scenario 1, both a UPF network element and an edge application server are switched. To be specific, the UPF network element is switched from the UPF network element 1 to the UPF network element 2, and the edge application server is switched from the edge application server 1 corresponding to the UPF network element 1 to the edge application server 2 corresponding to the UPF network element 2.

### (2) Migration scenario 2

Refer to FIG. 3B, an uplink direction is used as an example. A terminal device 2 may transmit a data packet of a service 2 to the UPF network element 3 by using an access network element (for example, an access network element 3), so that the UPF network element 3 can transmit the data packet to the edge application server 3. In this case, a data transmission path of the service 2 is: the terminal device 2---the access network element 3---the UPF network element 3---the edge application server 3. For ease of description, the data transmission path is referred to as a path 4. As the terminal device 2 moves, a terminal device 1 may move from a coverage area of the access network element 3 to a coverage area of an access network element 4. In this case, a data transmission path of a service 1 is: the terminal device 2---the access network element 4---the UPF network element 3---the edge application server 3. For ease of description, the data transmission path is referred to as a path 5.

However, the terminal device 2 may move out of a service range of the UPF network element 3, or because the terminal device 2 moves, the path 5 is not a better path for transmitting data of the service 2. Therefore, an appropriate data transmission path needs to be planned for the service 2 of the terminal device 2, and migration needs to be performed. For example, the data transmission path planned for the service 2 of the terminal device 2 is: the terminal device 2---the access network element 4---the UPF network element 4---the edge application server 3. For ease of description, the data transmission path is referred to as a path 6. In this way, the service 2 of the terminal device 2 may be migrated from the path 5 to the path 6, and the data is transmitted by using the path 6.

It can be learned that, in Migration scenario 2, a UPF network element is switched. To be specific, the UPF network element is switched from the UPF network element 3 to the UPF network element 4, and an edge application server is not switched.

### (3) Migration scenario 3

Refer to FIG. 3C, an uplink direction is used as an example. A terminal device 3 may transmit a data packet of a service 3 to the UPF network element 5 by using an access network element (for example, an access network element 5), so that the UPF network element 5 can transmit the data packet to the edge application server 4. In this case, a data transmission path of the service 3 is: the terminal device 3---the access network element 5---the UPF network element 5---the edge application server 4. For ease of description, the data transmission path is referred to as a path 7.

However, when load of the edge application server 4 is heavy, to implement load balancing, an appropriate data transmission path needs to be planned for the service 3 of the terminal device 3, and migration needs to be performed. For example, the data transmission path planned for the service 3 of the terminal device 3 is: the terminal device 3---the access network element 5---the UPF network element 5---the edge application server 5. For ease of description, the data transmission path is referred to as a path 8. In this way, a service 2 of a terminal device 2 may be migrated from the path 7 to the path 8, and data is transmitted by using the path 8.

It can be learned that, in Migration scenario 3, a UPF network element is not switched, and an edge application server is switched. To be specific, the edge application server is switched from the edge application server 4 corresponding to the UPF network element 5 to the edge application server 5 corresponding to the UPF network element 5.

It should be noted that the described Migration scenario 1 to Migration scenario 3 are three possible examples. Embodiments of this application may also be applicable to another possible migration scenario. This is not specifically limited.

In Migration scenario 1 and Migration scenario 2, after the service of the terminal device is migrated, because the UPF network element is switched or the edge application server is switched, a transport layer connection between the terminal device and the edge application server is re-established. However, in Migration scenario 3, after the service of the terminal device is migrated, because the UPF network element is not switched, and usually, IP addresses of the edge application server 4 and the edge application server 5 that are in a server cluster are the same, it may be considered that a transport layer connection remains unchanged (in other words, the transport layer connection is not re-established). It may be understood that, in Migration scenario 3, if the IP addresses of the edge application server 3 and the edge application server 4 are different, after the service of the terminal device is migrated, the transport layer connection may also be re-established.

The transport layer connection in embodiments of this application may be a transport layer connection based on the transmission control protocol (transmission control protocol, TCP), or may be a transport layer connection based on the quick user datagram protocol (user datagram protocol, UDP) internet connection (quick UDP internet connection, QUIC) protocol. This is not specifically limited.

### 3. Congestion control

Considering that a communication network is in a shared environment, the network may be congested due to multi-party communication. When the network is congested, if a large quantity of data packets continue to be sent, a data packet delay may be increased, a data packet loss may occur, and the like. Consequently, retransmission occurs. However, retransmission causes heavier load of the network, and further causes a larger delay and more packet losses. As a result, the network enters a vicious cycle. Therefore, congestion control is introduced to avoid a case in which data sent by a sender fills the entire network. In congestion control, a concept of a congestion window (congestion window, Cwnd) is defined to adjust a data amount to be sent by the sender. The congestion window is a state variable that the sender needs to maintain, and can dynamically change based on a network congestion degree. In other words, the congestion window is an upper limit, determined based on the network congestion degree, of the data amount to be sent by the sender. In addition, the sender may further maintain a sending window. When sending the data, the sender may use a smaller value between the congestion window and the sending window as the upper limit of the to-be-sent data amount. Congestion control mainly includes three phases: a slow start phase, a congestion avoidance phase, and a congestion occurrence phase. In embodiments of this application, it is assumed that the congestion window is less than or equal to the sending window. The following separately describes the three phases.

### (1) Slow start phase

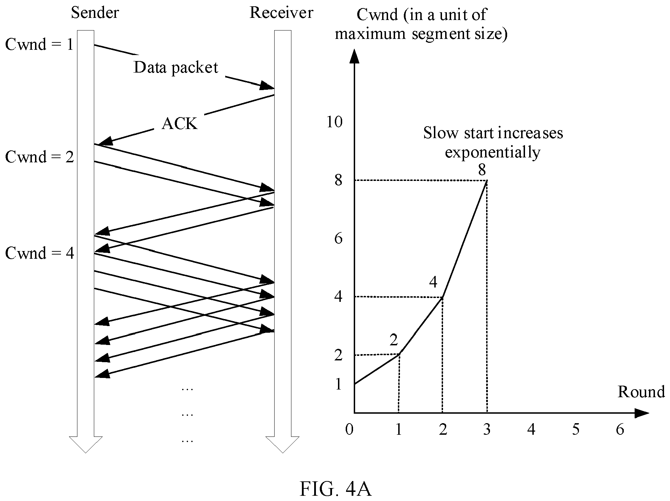

A start value of the congestion window may be a preset fixed value, for example, 1, indicating that a data amount that can be sent is a data amount of one maximum segment size (maximum segment size, MSS), where the maximum segment size may be in a unit of byte. Therefore, starting from sending a data amount of one MSS, the value of the congestion window may be increased by 1 each time the sender receives one piece of acknowledgement (acknowledgement, ACK) information. As shown in FIG. 4A, in a 0^{th} round, the congestion window is 1, and the sender may send a data amount of one MSS; in a 1^{st} round, the congestion window is 2, the value of the congestion window is twice the value of the congestion window in the previous round, that is, 1 + 1 = 2, and the sender may send a data amount of two MSSs; in a 2^{nd} round, the congestion window is 4, the value of the congestion window is twice the value of the congestion window in the previous round, that is, 2 + 2 = 4, and the sender may send a data amount of four MSSs; in a 3^{rd} round, the congestion window is 8, the value of the congestion window is twice the value of the congestion window in the previous round, that is, 4 + 4 = 8, and the sender may send a data amount of eight MSSs; and so on.

### (2) Congestion avoidance phase

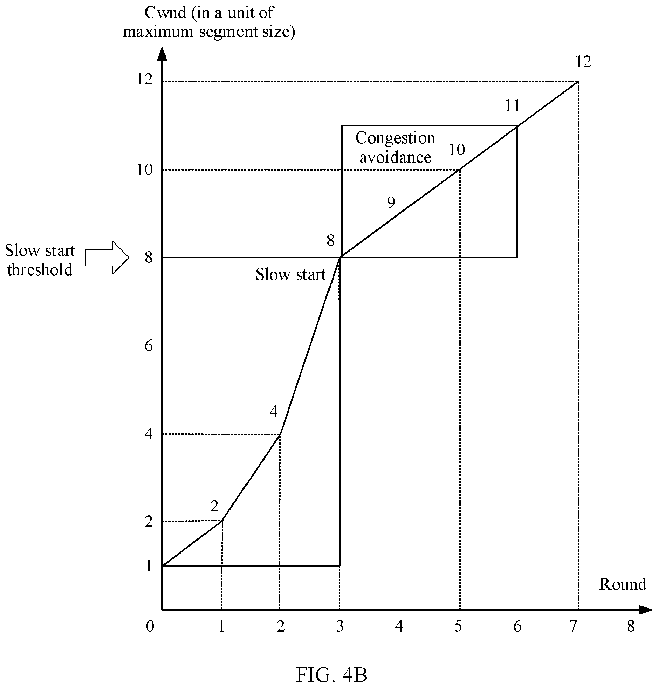

When the congestion window is greater than or equal to a slow start threshold, the congestion avoidance phase starts. In the congestion avoidance phase, each time the sender receives an ACK, the congestion window is increased by one-tenth of the congestion window. As shown in FIG. 4B, in a 3^{rd} round, the congestion window is 8, which is equal to the slow start threshold, and the sender may send a data amount of eight MSSs; in a 4^{th} round, the congestion window is 9, that is, 8 + 8 * 1/8 = 9, and the sender may send a data amount of nine MSSs; in a 5^{th} round, the congestion window is 10, that is, 9 + 9 * 1/9 = 10, and the sender may send a data amount of 10 MSSs; and so on. The slow start threshold is used to distinguish between the slow start phase and the congestion avoidance phase, and a value of the slow start threshold may be preset.

### (3) Congestion occurrence phase

When a packet loss occurs, a retransmission mechanism is triggered and the congestion occurrence phase starts. The retransmission mechanism may be mainly classified into two types: timeout-based retransmission and fast retransmission.

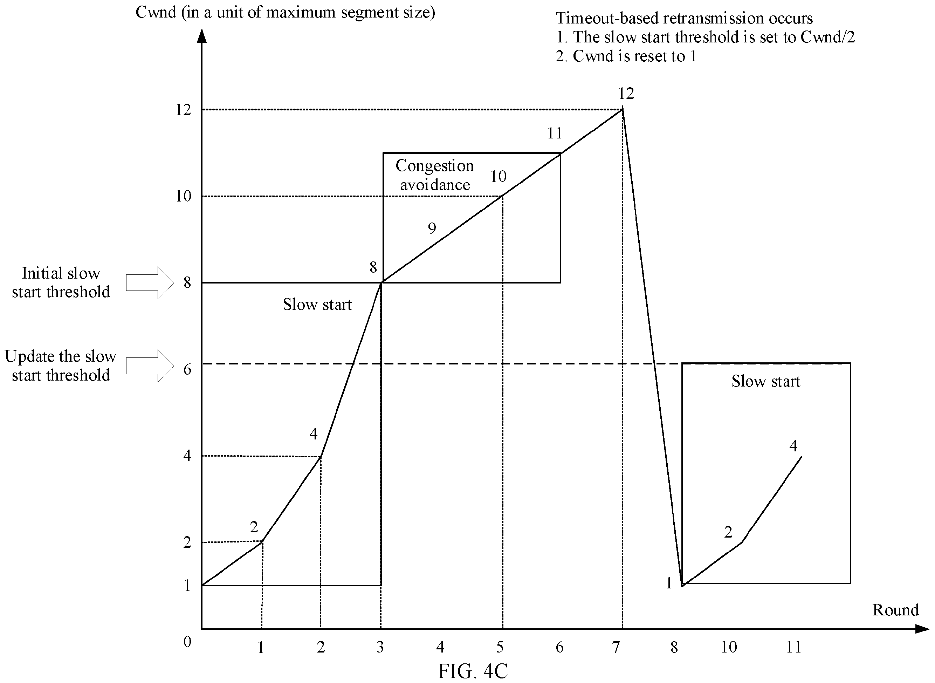

Timeout-based retransmission may mean that after sending a data packet, the sender does not receive a feedback from a receiver within a set time period, and therefore timeout-based retransmission occurs. When timeout-based retransmission occurs, the slow start threshold may be set to half of the congestion window, the congestion window is set to 1, and then the slow start phase re-starts, as shown in FIG. 4C.

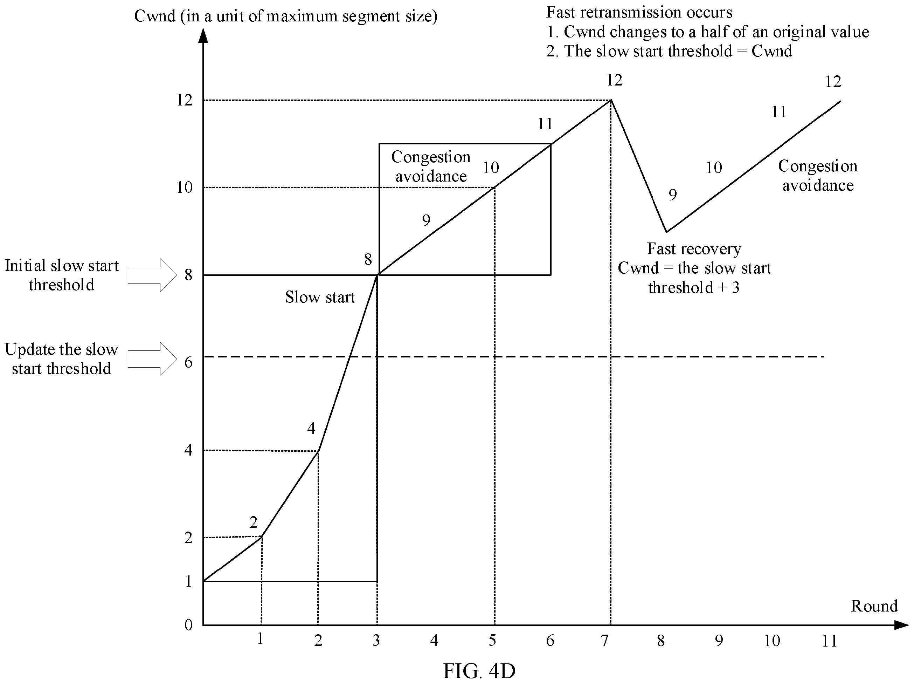

Fast retransmission may mean that when the receiver finds that a data packet is lost (where for example, if the receiver receives a data packet 1 and a data packet 3 but does not receive a data packet 2, it indicates that data packet 2 is lost), the receiver may send, for three times, an ACK of a previous data packet (namely, the data packet 1) of the lost data packet. When the sender receives three repeated ACKs, a fast retransmission mechanism is triggered. In this case, the congestion window is set to half of the original value, and the slow start threshold is equal to the congestion window. Then, a fast recovery phase starts, the congestion window is set to the slow start threshold plus 3 (where the number of 3 is added because three ACKs are determined to be received), and then the congestion avoidance phase starts, as shown in FIG. 4D. It should be understood that the foregoing uses an example in which the receiver sends the ACK for three times. During specific implementation, the receiver may send the ACK for another possible quantity of times. This is not limited in embodiments of this application.

It should be noted that, during specific implementation, the value of the congestion window (or the slow start threshold) may be a data amount in a unit of byte. In the foregoing descriptions, an example in which the value of the congestion window (or the slow start threshold) is a normalized data amount (in a unit of maximum segment size) is used for description. The maximum segment size may be obtained through negotiation when the sender and the receiver establish a transport layer connection (for example, a TCP-based transport layer connection).

According to the descriptions of the foregoing related technical features, after a service of a terminal device is migrated (for example, the service described in Migration scenario 1 or Migration scenario 2 is migrated), the transport layer connection is re-established. After the transport layer connection is re-established, when the terminal device or an edge application server starts to send a data packet, the terminal device or the edge application server goes through the slow start phase again. Consequently, a data transmission rate is reduced, and a transmission delay is increased. Consequently, the increased transmission delay severely affects user experience of a low-delay service. For example, before the service of the terminal device is migrated, sending a data amount of 1000 MSSs may take only one piece of round-trip time (round-trip time, RTT). However, after the service of the terminal device is migrated, the slow start phase needs to be gone through again, for example, starting from sending a data amount of one MSS. To be specific, a data amount of one MSS is transmitted in 1^{st} RTT, a data amount of two MSSs is transmitted in 2^{nd} RTT, a data amount of 2² MSSs is transmitted in 3^{rd} RTT, a data amount of 2³ MSSs is transmitted in 4^{th} RTT, a data amount of 2⁴ MSSs is transmitted in 5^{th} RTT, and so on. Consequently, sending the data amount of 1000 MSSs may take 10 pieces of RTT, and the nine pieces of RTT added during service running severely affect user experience.

Based on this, embodiments of this application provide a data transmission method, to resolve problems that a data transmission rate is reduced and a transmission delay is increased because when sending data based on a re-established transport layer connection, a sender needs to go through a slow start phase of congestion control again.

For example, the data transmission method provided in embodiments of this application may include three possible solutions: Solution 1, Solution 2, and Solution 3. In Solution 1, an SMF network element obtains first transmission delay information of data packet transmission between an access network element and a terminal device, determines congestion control parameter information based on at least the first transmission delay information, and sends the congestion control parameter information to a data sending network element, where the congestion control parameter information indicates a data amount of a first service sent by the data sending network element to a second UPF network element for the first time after a UPF network element that serves the first service in the data sending network element is switched from a first UPF network element to the second UPF network element.

It should be noted that, in Solution 1, the data sending network element (or a sender) may include the terminal device and/or a second edge application server corresponding to the second UPF network element, and the congestion control parameter information may include first congestion control parameter information and/or second congestion control parameter information. In other words, the SMF network element may send the first congestion control parameter information to the second edge application server, and/or send the second congestion control parameter information to the terminal device.

The first congestion control parameter information indicates a data amount (referred to as a first data amount for ease of description) of the first service sent by the second edge application server to the terminal device for the first time after the UPF network element that serves the first service is switched from the first UPF network element to the second UPF network element. For example, the first congestion control parameter information may include the first data amount, and a unit of the first data amount may be a byte. If the first congestion control parameter information is less than a slow start threshold, after a transport layer connection is re-established, the second edge application server enters a slow start phase, and uses the first congestion control parameter information as an initial value of a congestion window. That is, the data amount sent by the second edge application server to the terminal device for the first time is equal to the first data amount. In addition, subsequent sending (for example, sending for the second time or sending for the third time) may be performed with reference to the foregoing related descriptions of the slow start phase. If the first congestion control parameter information is greater than or equal to a slow start threshold, after a transport layer connection is re-established, the second edge application server may skip a slow start phase, enter a congestion avoidance phase, and send a data packet of the first service based on the first congestion control parameter information. That is, the data amount sent by the second edge application server to the terminal device for the first time is equal to the first data amount. In addition, subsequent sending (for example, sending for the second time or sending for the third time) may be performed with reference to the foregoing related descriptions of the congestion avoidance phase.

The second congestion control parameter information indicates a data amount (referred to as a second data amount for ease of description) of the first service sent by the terminal device to the second edge application server corresponding to the second UPF network element for the first time after the UPF network element that serves the first service is switched from the first UPF network element to the second UPF network element. For example, the second congestion control parameter information may include the second data amount, and a unit of the second data amount may be a byte. If the second congestion control parameter information is less than a slow start threshold, after a transport layer connection is re-established, the terminal device enters a slow start phase, and uses the second congestion control parameter information as an initial value of a congestion window. That is, the data amount sent by the terminal device to the second edge application server for the first time is equal to the second data amount. In addition, subsequent sending (for example, sending for the second time or sending for the third time) may be performed with reference to the foregoing related descriptions of the slow start phase. If the second congestion control parameter information is greater than or equal to a slow start threshold, after a transport layer connection is re-established, the terminal device may skip a slow start phase, enter a congestion avoidance phase, and send a data packet of the first service based on the second congestion control parameter information. That is, the data amount sent by the terminal device to the second edge application server for the first time is equal to the second data amount. In addition, subsequent sending (for example, sending for the second time or sending for the third time) may be performed with reference to the foregoing related descriptions of the congestion avoidance phase.

In Solution 2, an SMF network element obtains first transmission delay information of data packet transmission between an access network element and a terminal device, and sends third information to a data sending network element, where the third information includes the first transmission delay information, the third information is used to determine congestion control parameter information, and the congestion control parameter information indicates a data amount of a first service sent by the data sending network element to a second UPF network element for the first time after a UPF network element that serves the first service in the data sending network element is switched from a first UPF network element to the second UPF network element.

It should be noted that, in Solution 2, the data sending network element may include the terminal device and/or a second edge application server corresponding to the second UPF network element, the third information may include third information 1 and/or third information 2, and both the third information 1 and the third information 2 include the first transmission delay information. The third information 1 is used to determine first congestion control parameter information, and the third information 2 is used to determine second congestion control parameter information. In other words, the SMF network element may send the third information 1 to the second edge application server, so that the second edge application server can determine the first congestion control parameter information based on the third information 1; and/or the SMF network element may send the third information 2 to the terminal device, so that the terminal device can determine the second congestion control parameter information based on the third information 2.

In Solution 3, an SMF network element obtains first transmission delay information of data packet transmission between an access network element and a terminal device, and sends third information to a first edge application server, where the third information includes the first transmission delay information, and the third information is used to determine congestion control parameter information. Correspondingly, after receiving the third information, the first edge application server may determine the congestion control parameter information based on the third information, and send the congestion control parameter information to a data sending network element, where the congestion control parameter information indicates a data amount of a first service sent by the data sending network element to a second UPF network element for the first time after a UPF network element that serves the first service in the data sending network element is switched from a first UPF network element to the second UPF network element.

It should be noted that, in Solution 3, the data sending network element may include the terminal device and/or a second edge application server corresponding to the second UPF network element, and the third information may be used to determine first congestion control parameter information and second congestion control parameter information. In other words, the first edge application server may send the first congestion control parameter information to the second edge application server; and/or the first edge application server may send the second congestion control parameter information to the terminal device.

According to Solution 1, Solution 2, or Solution 3, after the service is migrated, the data sending network element may send data based on the data amount that is determined by using the congestion control parameter information and that is of the first service sent for the first time. Compared with a solution, in a conventional technology, in which data transmission starts from sending a data amount of one MSS, this manner can accelerate or even skip the slow start phase, so that congestion control for re-establishing the transport layer connection can be optimized, data transmission efficiency can be improved, and a data transmission delay can be reduced. In addition, the congestion control parameter information is determined based on at least the first transmission delay information. Compared with the conventional technology in which the start value of the congestion window is preset, the first transmission delay information is considered in this manner. Therefore, the determined congestion control parameter information is more reasonable.

In addition, in Solution 1, Solution 2, and Solution 3, when the data sending network element is the terminal device, the data amount of the first service sent by the data sending network element to the second UPF network element for the first time is the data amount of the first service sent by the terminal device by using the second UPF network element to the second edge application server corresponding to the second UPF network element for the first time. When the data sending network element is the terminal device, the data amount of the first service sent by the data sending network element to the second UPF network element for the first time is the data amount of the first service sent by the second edge application server to the terminal device by using the second UPF network element for the first time.

In Solution 1, Solution 2, and Solution 3, the first service in the data sending network element may refer to a first service corresponding to a first application or a first application program running in the sending network element. The congestion control parameter information may also be a value of a data amount, and a sending amount of service data is indicated or notified to the data sending network element by using the value of the data amount. The first UPF network element and the second UPF network element may be different UPF network elements. In addition, the first edge application server corresponding to the first UPF network element and the second edge application server corresponding to the second UPF network element may be different edge application servers (where this case may correspond to Migration scenario 1), or may be a same edge application server (where this case may correspond to Migration scenario 2). In embodiments of this application, an example in which the first edge application server and the second edge application server are different edge application servers is mainly used for description. When the first edge application server and the second edge application server are a same edge application server, for a related implementation, refer to the descriptions in which the first edge application server and the second edge application server are different edge application servers. A main difference lies in that when the first edge application server and the second edge application server are a same edge application server, the first edge application server may no longer interact with the second edge application server, or a first AF network element corresponding to the first edge application server may no longer interact with a second AF network element corresponding to the second edge application server. It should be noted that in embodiments of this application, the first AF network element may be replaced with a first edge enabler server, and the second AF network element may be replaced with a second edge enabler server.

In Solution 1, Solution 2, and Solution 3, that the third information, the third information 1, and the third information 2 include the first transmission delay information is used as an example. In another possible solution, the third information is used as an example, and the third information may alternatively include the first transmission delay information of data packet transmission between the access network element and the terminal device and second transmission delay information of data packet transmission between the second UPF network element and the access network element. That is, the third information includes total delay information. The total delay information may be a sum of values indicated by the first transmission delay information and the second transmission delay information. For example, if the delay value indicated by the first transmission delay information of data packet transmission between the access network element and the terminal device is 5 ms, and the transmission delay information of data packet transmission between the second UPF network element and the access network element is 4 ms, the total delay information may be 9 ms. In this case, two different types of delay information are not distinguished in the total delay information. The total delay information may alternatively simply include the two types of delay information, and values are not added up. In Solution 1, Solution 2, Solution 3, and the following embodiments, in another implementation, the third information may not include the first transmission delay information, but includes the total delay information. For a method or an algorithm for obtaining the congestion control parameter information based on the total delay information, refer to a method for using the first transmission delay information.

The following describes in detail the data transmission method provided in embodiments of this application with reference to Embodiment 1 to Embodiment 3.

### Embodiment 1

In Embodiment 1, a possible implementation procedure of the data transmission method is described based on Solution 1.

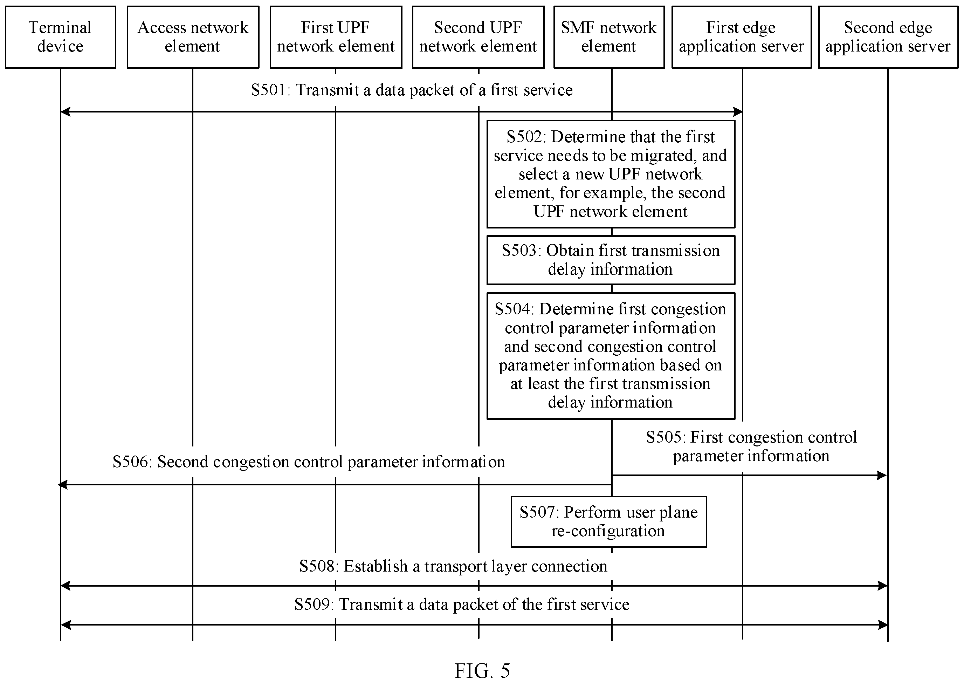

FIG. 5 is a schematic flowchart corresponding to a data transmission method according to Embodiment 1 of this application. As shown in FIG. 5, the method may include the following steps.

S501: A terminal device and a first edge application server transmit a data packet of a first service by using a first path.

Herein, the transmitting a data packet of a first service by using a first path may include: transmitting an uplink data packet and/or a downlink data packet of the first service by using the first path. The first path may be: the terminal device---an access network element---a first UPF network element---the first edge application server corresponding to the first UPF network element.

For example, when the terminal device needs to send or receive the data packet of the first service, the terminal device may initiate a protocol data unit (protocol data unit, PDU) session establishment procedure, and establish a PDU session between the terminal device and the first UPF network element by using the PDU session establishment procedure. Further, a transport layer connection may be established between the terminal device and the first edge application server. In this way, the terminal device and the first edge application server may transmit the data packet of the first service by using the first path.

S502: An SMF network element determines that the first service needs to be migrated, and selects a UPF network element to be switched to, namely, a new UPF network element. For example, the new UPF network element selected by the SMF network element is a second UPF network element.

Herein, the SMF network element may determine, in a plurality of manners, that the first service needs to be migrated. The following describes two possible implementations.

### (1) Implementation 1

The SMF network element may obtain location information of the terminal device, and send the location information of the terminal device to a first AF network element corresponding to the first edge application server. For example, the SMF network element may periodically send the location information of the terminal device to the first AF network element. Correspondingly, after receiving the location information of the terminal device, the first AF network element may determine, based on the location information of the terminal device, whether an edge application server needs to be switched for the terminal device. After determining that the edge application server needs to be switched for the terminal device, the first AF network element may send switching indication information to the SMF network element, where the switching indication information may include related information of a new edge application server (for example, a second edge application server). For example, the related information of the second edge application server may include location information of the second edge application server. Correspondingly, after receiving the switching indication information, the SMF network element may determine, based on the switching indication information, that the first service needs to be migrated, and select a new UPF network element. It may be understood that the SMF network element may select the new UPF network element in a plurality of manners. For example, the SMF network element may select the new UPF network element based on the location information of the terminal device and the location information of the second edge application server. This is not limited in this embodiment of this application.

There may be a plurality of manners in which the first AF network element determines, based on the location information of the terminal device, whether the edge application server needs to be switched for the terminal device. For example, the first edge application server is deployed for an area 1, and the second edge application server is deployed for an area 2. If the location information of the terminal device indicates that the terminal device is always located in the area 1, the first AF network element may determine that the edge application server does not need to be switched for the terminal device. If the location information of the terminal device indicates that the terminal device moves from the area 1 to the area 2, the first AF network element may determine that the edge application server needs to be switched for the terminal device, to be specific, switched from the first edge application server to the second edge application server.

### (2) Implementation 2

The SMF network element may obtain a transmission delay of the first service. If the transmission delay of the first service cannot meet a QoS requirement of the first service, the SMF network element may determine that the first service needs to be migrated, and select a new UPF network element. The transmission delay of the first service may be an uplink transmission delay between the terminal device and the first UPF network element for the first service (where the uplink transmission delay is a sum of an uplink transmission delay between the terminal device and the access network element for the first service and an uplink transmission delay between the access network element and the first UPF network element for the first service), or the transmission delay of the first service may be a downlink transmission delay between the terminal device and the first UPF network element for the first service (where the downlink transmission delay is a sum of a downlink transmission delay between the terminal device and the access network element for the first service and a downlink transmission delay between the access network element and the first UPF network element for the first service). For example, the SMF network element may obtain, from a PCF network element, a policy and charging control (policy and charging control, PCC) rule (rule) corresponding to the first service. The PCC rule may include a service data flow (service data flow, SDF) template and a QoS parameter that correspond to the first service, and the QoS parameter corresponding to the first service is used to represent the QoS requirement of the first service. For example, the QoS parameter corresponding to the first service may include a maximum transmission delay (for example, a maximum uplink transmission delay or a maximum downlink transmission delay) of the first service. After obtaining the transmission delay of the first service, the SMF network element may compare the transmission delay of the first service with the maximum transmission delay, and further determine, based on a comparison result, whether the transmission delay of the first service meets the QoS requirement of the first service. For example, if the uplink transmission delay between the terminal device and the first UPF network element for the first service is greater than the maximum uplink transmission delay of the first service, it indicates that the transmission delay of the first service cannot meet the QoS requirement of the first service. For another example, if the downlink transmission delay between the terminal device and the first UPF network element for the first service is greater than the maximum downlink transmission delay of the first service, it indicates that the transmission delay of the first service cannot meet the QoS requirement of the first service.

The SMF network element may obtain the transmission delay of the first service in a plurality of manners. For example, the SMF network element may indicate the first UPF network element to monitor and report the transmission delay of the first service, so that the first UPF network element can obtain the transmission delay of the first service and send the transmission delay to the SMF network element.

It should be noted that Implementation 1 and Implementation 2 are two possible examples. During specific implementation, the SMF network element may alternatively determine, based on another possible trigger factor, that the first service needs to be migrated. This is not limited in this embodiment of this application.

S503: The SMF network element obtains first transmission delay information of data packet transmission between the access network element and the terminal device.

Herein, the SMF network element may obtain the first transmission delay information in a plurality of manners. In a possible implementation, the SMF network element may send first information to the first UPF network element, where the first information is used to request the first transmission delay information. For example, the first information may include first identification information of the first service. For example, the first identification information of the first service may be 5-tuple information of the first service. Correspondingly, after receiving the first information, the first UPF network element may perform QoS monitoring on a corresponding service flow based on the 5-tuple information to obtain the first transmission delay information, and send the first transmission delay information to the SMF network element. For example, the SMF network element may send the first information to the first UPF network element by using an N4 session modification request (N4 session modification request) message. Correspondingly, the first UPF network element may send the first transmission delay information to the SMF network element by using an N4 session modification response (N4 session modification Response) message. It should be noted that, in this implementation, the first transmission delay information obtained by the SMF network element may be transmission delay information between the access network element and the terminal device for the first service.

In another possible implementation, the SMF network element may send second information to an NWDAF network element, where the second information is used to request the first transmission delay information. For example, the second information may include QoS parameter information of the first service and an identifier (RAN ID) of the access network element, and optionally, may further include an allocation and retention priority (allocation and retention priority, ARP). The QoS parameter information of the first service may include a 5G quality of service identifier (5G QoS identifier, 5QI) and a guaranteed flow bit rate (guaranteed flow bit rate, GFBR). For example, the SMF network element may invoke Nnwdaf_AnalysticsInfo_Request to send the second information to the NWDAF network element. The second information may include an analytics identifier (Analytics ID), a target of analytics reporting (Target of Analytics Reporting), and analytics filter information (Analytics Filter information), where Analytics ID = air interface delay prediction, Target of Analytics Reporting = any UE, and Analytics Filter information = (ARP, SQI, GFBR, RAN ID). Correspondingly, after receiving the second information, the NWDAF network element may predict an air interface delay of a type of service (where QoS parameter information of the type of service is the SQI and the GFBR that are in Analytics Filter information, and an ARP is the ARP in Analytics Filter information) to obtain the first transmission delay information, and send the first transmission delay information to the SMF network element. It should be noted that, in this implementation, the first transmission delay information obtained by the SMF network element may be transmission delay information between the access network element and one or more terminal devices connected to the access network element for a type of service including the first service.

In this embodiment of this application, the first transmission delay information may include at least one of the following: an uplink transmission delay of data packet transmission between the access network element and the terminal device, a downlink transmission delay of data packet transmission between the access network element and the terminal device, and a sum of the uplink transmission delay and the downlink transmission delay of data packet transmission between the access network element and the terminal device.

S504: The SMF network element determines first congestion control parameter information and second congestion control parameter information based on at least the first transmission delay information.

In an example, that the SMF network element determines the first congestion control parameter information based on at least the first transmission delay information may be: The SMF network element determines the first congestion control parameter information based on the first transmission delay information. That the SMF network element determines the second congestion control parameter information based on at least the first transmission delay information may be: The SMF network element determines the second congestion control parameter information based on the first transmission delay information.

In another example, that the SMF network element determines the first congestion control parameter information based on at least the first transmission delay information may be: The SMF network element determines the first congestion control parameter information based on a downlink GFBR of the first service and the first transmission delay information. That the SMF network element determines the second congestion control parameter information based on at least the first transmission delay information may be: The SMF network element determines the second congestion control parameter information based on an uplink GFBR of the first service and the first transmission delay information. The SMF network element may obtain the downlink GFBR and/or the uplink GFBR of the first service in a plurality of manners. For example, refer to the foregoing descriptions. The SMF network element may obtain the QoS parameter corresponding to the first service, and the QoS parameter corresponding to the first service may include the downlink GFBR and/or the uplink GFBR of the first service.

For example, the SMF network element may determine the first congestion control parameter information by using the following formula: the first congestion control parameter information (for example, a first data amount) = the downlink GFBR * the sum of the uplink transmission delay and the downlink transmission delay of data packet transmission between the access network element and the terminal device. In addition, the SMF network element may determine the second congestion control parameter information by using the following formula: the second congestion control parameter information (for example, a second data amount) = the uplink GFBR * the sum of the uplink transmission delay and the downlink transmission delay of data packet transmission between the access network element and the terminal device.

It may be understood that assuming that the uplink transmission delay and the downlink transmission delay of data packet transmission between the access network element and the terminal device are the same, when the first transmission delay information includes only the uplink transmission delay (or the downlink transmission delay) of data packet transmission between the access network element and the terminal device, in the foregoing formula, the sum of the uplink transmission delay and the downlink transmission delay of data packet transmission between the access network element and the terminal device may be 2 * the uplink transmission delay (or the downlink transmission delay) of data packet transmission between the access network element and the terminal device.

In another example, that the SMF network element determines the first congestion control parameter information based on at least the first transmission delay information may be: The SMF network element determines the first congestion control parameter information based on a downlink GFBR of the first service, the first transmission delay information and second transmission delay information of data packet transmission between the access network element and the second UPF network element. That the SMF network element determines the second congestion control parameter information based on at least the first transmission delay information may be: The SMF network element determines the second congestion control parameter information based on an uplink GFBR of the first service, the first transmission delay information, and the second transmission delay information. The second transmission delay information may be determined by the SMF network element based on topology information between the access network element and the second UPF network element. For example, the topology information between the access network element and the second UPF network element may include information about a possible path for data transmission between the access network element and the second UPF network element. For example, the path for data transmission between the access network element and the second UPF network element includes a path 1 and a path 2. The path 1 is: the access network element---a node 1---the second UPF network element, and the path 2 is: the access network element---a node 2---a node 3---the second UPF network element.

The second transmission delay information may be transmission delay lower bound information (or minimum transmission delay information) of data packet transmission between the access network element and the second UPF network element. The transmission delay lower bound information may be a minimum delay of data packet transmission between the access network element and the second UPF network element. The minimum delay may be an ideal delay of data transmission performed by using a shortest path (for example, the path 1) between the access network element and the second UPF network element (in other words, it is assumed that there is no queuing when the node 1 forwards the data packet). The second transmission delay information may include at least one of the following: an uplink transmission delay of data packet transmission between the access network element and the second UPF network element, a downlink transmission delay of data packet transmission between the access network element and the second UPF network element, and a sum of the uplink transmission delay and the downlink transmission delay of data packet transmission between the access network element and the second UPF network element.

For example, the SMF network element may determine the first congestion control parameter information by using the following formula: the first congestion control parameter information (for example, a first data amount) = the downlink GFBR * (the sum of the uplink transmission delay and the downlink transmission delay of data packet transmission between the access network element and the terminal device + the sum of the uplink transmission delay and the downlink transmission delay of data packet transmission between the access network element and the second UPF network element). In addition, the SMF network element may determine the second congestion control parameter information by using the following formula: the second congestion control parameter information (for example, a second data amount) = the uplink GFBR * (the sum of the uplink transmission delay and the downlink transmission delay of data packet transmission between the access network element and the terminal device + the sum of the uplink transmission delay and the downlink transmission delay of data packet transmission between the access network element and the second UPF network element).

It may be understood assuming that the uplink transmission delay and the downlink transmission delay of data packet transmission between the access network element and the second UPF network element are the same, when the second transmission delay information includes only the uplink transmission delay (or the downlink transmission delay) of data packet transmission between the access network element and the second UPF network element, in the foregoing formula, the sum of the uplink transmission delay and the downlink transmission delay of data packet transmission between the access network element and the second UPF network element may be 2 * the uplink transmission delay (or the downlink transmission delay) of data packet transmission between the access network element and the second UPF network element.

S505: The SMF network element sends the first congestion control parameter information to the second edge application server.

S506: The SMF network element sends the second congestion control parameter information to the terminal device.

For S505 and S506, the following describes some possible implementations with reference to Example 1 and Example 2.

### (1) Example 1

For S505, in a possible implementation, the SMF network element may send the first congestion control parameter information to the first AF network element, and may further send migration indication information, second identification information of the first service corresponding to the first congestion control parameter information, and identification information of the terminal device. The migration indication information may indicate the first AF network element to switch the edge application server, the second identification information of the first service may include an ID of the first service, and the identification information of the terminal device may be a generic public subscription identify (generic public subscription identify, GPSI) of the terminal device or an IP address of the terminal device. This is not specifically limited. For example, the SMF network element may invoke Nsmf_EventExpouse_Notify to send a notification message to the first AF network element, where the notification message includes the first congestion control parameter information, the migration indication information, the second identification information of the first service, and the identification information of the terminal device. Alternatively, the SMF network element may send a notification message to the first AF network element by using an NEF network element. This is not specifically limited. For example, in S502, the SMF network element determines, in Implementation 1, that the first service needs to be migrated. After receiving the notification message, the first AF network element may determine, based on the migration indication information, that the edge application server needs to be switched to the second edge application server, and may send the first congestion control parameter information, the second identification information of the first service, and the identification information of the terminal device to a second AF network element corresponding to the second edge application server. After receiving the first congestion control parameter information, the second identification information of the first service, and the identification information of the terminal device, the second AF network element may send the first congestion control parameter information, the second identification information of the first service, and the identification information of the terminal device to the second edge application server. Further, the second edge application server may determine, based on the first congestion control parameter information, the second identification information of the first service, and the identification information of the terminal device, a data amount of the first service sent by the second edge application server to the terminal device for the first time after a UPF network element that serves the first service is switched from the first UPF network element to the second UPF network element. In addition, the first edge application server and the second edge application server may migrate context of an application layer and context of a transport layer. For a specific implementation, refer to a conventional technology.

For S505, in another possible implementation, the SMF network element may send the first congestion control parameter information to the first AF network element, and may further send migration indication information, second identification information of the first service corresponding to the first congestion control parameter information, and identification information of the terminal device. For example, in S502, the SMF network element determines, in Implementation 1, that the first service needs to be migrated. After receiving the first congestion control parameter information, the migration indication information, the second identification information of the first service corresponding to the first congestion control parameter information, and the identification information of the terminal device, the first AF network element may determine, based on the migration indication information, that the edge application server needs to be switched to the second edge application server, and send the first congestion control parameter information, the second identification information of the first service, the identification information of the terminal device, and identification information of the second edge server to the first edge application server. The first edge application server may send the first congestion control parameter information, the second identification information of the first service, and the identification information of the terminal device to the second edge application server based on the identification information of the second edge server. The identification information of the second edge application server may be an IP address of the second edge application server. This is not specifically limited. In addition, the first edge application server and the second edge application server may migrate context of an application layer and context of a transport layer. For example, the first edge application server may send the first congestion control parameter information, the second identification information of the first service, and the identification information of the terminal device to the second edge application server in a context migration process.

For S506, the SMF network element may send the second congestion control parameter information to the terminal device by using a non-access stratum (non-access stratum, NAS) message, and may further send the second identification information of the first service corresponding to the second congestion control parameter information. The non-access stratum message may be a PDU session modification command (PDU session modification command) message. Further, the terminal device may determine, based on the second congestion control parameter information and the second identification information of the first service, a data amount of the first service sent by the terminal device to the second edge application server for the first time after a UPF network element that serves the first service is switched from the first UPF network element to the second UPF network element.

In other words, in Example 1, the SMF network element may send the first congestion control parameter information to the first AF network element by using a control plane (where the first AF network element may subsequently send the first congestion control parameter information to the second edge application server), and send the second congestion control parameter information to the terminal device by using the control plane.

### (2) Example 2

For S505 and S506, the SMF network element may send the first congestion control parameter information and the second congestion control parameter information to the first AF network element, and may further send migration indication information, second identification information of the first service corresponding to the first congestion control parameter information and the second congestion control parameter information, and identification information of the terminal device. For example, the SMF network element may invoke Nsmf_EventExpouse_Notify to send a notification message to the first AF network element, where the notification message includes the first congestion control parameter information, the second congestion control parameter information, the migration indication information, the second identification information of the first service, and the identification information of the terminal device. Alternatively, the SMF network element may send a notification message to the first AF network element by using an NEF network element. This is not specifically limited. After receiving the notification message, the first AF network element may determine, based on the migration indication information, that the edge application server needs to be switched to the second edge application server, so that the first AF network element can send the first congestion control parameter information, the second identification information of the first service, and the identification information of the terminal device to the second edge application server, and the first AF network element may send the second congestion control parameter information and the second identification information of the first service to the terminal device.

For a specific implementation in which the first AF network element sends the first congestion control parameter information, the second identification information of the first service, and the identification information of the terminal device to the second edge application server, refer to the foregoing descriptions in Example 1. For example, the first AF network element may send the first congestion control parameter information, the second identification information of the first service, and the identification information of the terminal device to the second edge application server by using the first edge application server or a second AF network element. Details are not described again.

There may be a plurality of implementations in which the first AF network element sends the second congestion control parameter information and the second identification information of the first service to the terminal device. For example, in a possible implementation, the first AF network element sends the second congestion control parameter and the second identification information of the first service to the first edge application server, so that the first edge application server can send the second congestion control parameter information and the second identification information of the first service to the terminal device. For example, the first edge application server sends the second congestion control parameter information and the second identification information of the first service to an application client in the terminal device by using the first UPF network element and the access network element. Specifically, the first edge application server may send the second congestion control parameter information and the second identification information of the first service to the first UPF network element. After receiving the second congestion control parameter information and the second identification information of the first service, the first UPF network element may send the second congestion control parameter information and the second identification information of the first service to the access network element, so that the access network element can send the second congestion control parameter information and the second identification information of the first service to the application client in the terminal device. In this way, the application client may determine, based on the second congestion control parameter and the second identification information of the first service, a data amount of the first service sent to the second edge application server for the first time after the first service is migrated.

In another possible implementation, the first AF network element sends the second congestion control parameter information and the second identification information of the first service to an edge enabler client in the terminal device by using the first UPF network element and the access network element. After receiving the second congestion control parameter information and the second identification information of the first service, the edge enabler client may send the second congestion control parameter information and the second identification information of the first service to an application client in the terminal device, so that the application client can determine, based on the second congestion control parameter and the second identification information of the first service, a data amount of the first service sent to the second edge application server for the first time after the first service is migrated.

In other words, in Example 2, the SMF network element may send both the first congestion control parameter information and the second congestion control parameter information to the first AF network element by using a control plane, so that subsequently, the first AF network element or the first edge application server can send the second congestion control parameter information to the terminal device by using a user plane.

S507: The SMF network element performs user plane re-configuration.

Herein, that the SMF network element performs user plane re-configuration may include: The SMF network element establishes a PDU session between the terminal device and the second UPF network element for the terminal device.

It should be noted that, in a possible implementation, in S505 (and S506), after the first edge application server and the second edge application server complete migrating the context of the application layer and the context of the transport layer, the first AF network element may return an ACK to the SMF network element, so that after receiving the ACK, the SMF network element can perform user plane re-configuration. In another possible implementation, in S505 (and S506), when sending information such as the first congestion control parameter information to the first AF network element, the SMF network element may start a timer. After the timer expires, the SMF network element may perform user plane re-configuration. Duration of the timer may be set based on duration required by the first edge application server and the second edge application server to migrate the context of the application layer and the context of the transport layer. This is not specifically limited. In this case, the first AF network element may not need to return the ACK to the SMF network element, so that signaling overheads can be reduced.

S508: The terminal device establishes a transport layer connection to the second edge application server.

It should be noted that, in a possible implementation, after the terminal device establishes the transport layer connection to the second edge application server, the transport layer connection between the terminal device and the first edge application server may be released (or deleted). For example, release may be triggered by the terminal device, or release may be triggered by the first edge application server. This is not limited in this embodiment of this application. In another possible implementation, before sending the first congestion control parameter information, the second identification information of the first service, and the identification information of the terminal device to the second edge application server, the first edge application server may trigger release of the transport layer connection between the terminal device and the first edge application server, so that the first edge application server can send the first congestion control parameter information, the second identification information of the first service, and the identification information of the terminal device to the second edge application server, and can further send transmission interruption information of the first service (where for example, the transmission interruption information may include a sequence number of the last data packet of the first service sent by the first edge application server to the terminal device, for example, a data packet n). In this way, the second edge application server learns of the transmission interruption information of the first service, and may further continue to transmit the first service based on the transmission interruption information (where for example, a 1^{st} data packet sent by the second edge server to the terminal device may be a data packet n+1). It should be understood that specific time at which the transport layer connection between the terminal device and the first edge application server is released is not limited in this embodiment of this application.

S509: The terminal device and the second edge application server transmit a data packet of the first service by using a second path.

Herein, the transmitting a data packet of the first service by using a second path may include: transmitting an uplink data packet and/or a downlink data packet of the first service by using the second path. The second path may be: the terminal device---the access network element---the second UPF network element---the second edge application server.

In the foregoing manner, after service migration occurs, a data sending network element (the terminal device or the second edge application server) may determine, based on the congestion control parameter information, a data amount of the first service sent to the second UPF network element for the first time, so that a slow start phase can be accelerated or even skipped, congestion control for re-establishing the transport layer connection can be optimized, data transmission efficiency can be improved, and a data transmission delay can be reduced. In addition, because the congestion control parameter information is determined based on at least the first transmission delay information, the determined congestion control parameter information is more reasonable. In addition, the SMF network element calculates the first congestion control parameter information and the second congestion control parameter information, and respectively sends the first congestion control parameter information and the second congestion control parameter information to the second edge application server and the terminal device. Because a small quantity of resources are required for transmitting the first congestion control parameter information and the second congestion control parameter information, transmission resources can be effectively reduced.

### Embodiment 2

In Embodiment 2, a possible implementation procedure of the data transmission method is described based on Solution 2.

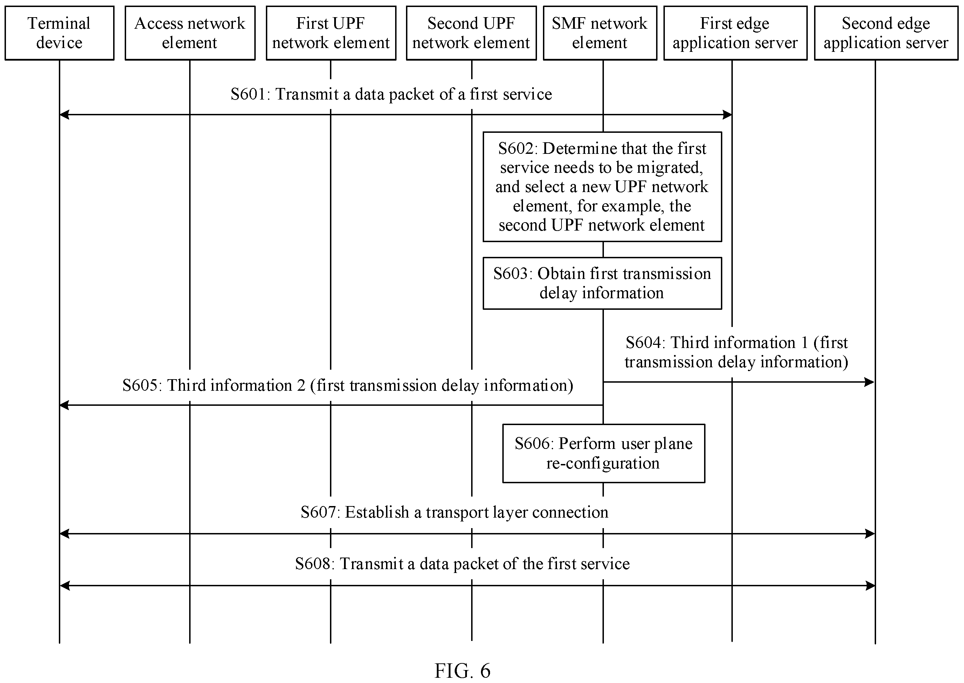

FIG. 6 is a schematic flowchart corresponding to a data transmission method according to Embodiment 2 of this application. As shown in FIG. 6, the method may include the following steps.

S601: A terminal device and a first edge application server transmit a data packet of a first service by using a first path.

S602: An SMF network element determines that the first service needs to be migrated, and selects a new UPF network element. For example, the new UPF network element selected by the SMF network element is a second UPF network element.

S603: The SMF network element obtains first transmission delay information of data packet transmission between an access network element and the terminal device.

For example, for related implementations of S601 to S603, refer to the descriptions of S501 to S503 in Embodiment 1.

S604: The SMF network element sends third information 1 to a second edge application server, and correspondingly, after receiving the third information 1, the second edge application server may determine first congestion control parameter information based on the third information 1.

Herein, in an example, the third information 1 may include the first transmission delay information. That the second edge application server determines the first congestion control parameter information based on the third information 1 may be: The second edge application server determines the first congestion control parameter information based on the first transmission delay information.

In another example, the third information 1 may include the first transmission delay information and a downlink GFBR of the first service. That the second edge application server determines the first congestion control parameter information based on the third information 1 may be: The second edge application server determines the first congestion control parameter information based on the first transmission delay information and the downlink GFBR of the first service.

In another example, the third information 1 may include the first transmission delay information, a downlink GFBR of the first service, and second transmission delay information. It should be noted that the third information 1 may include two types of delay information, namely, the first transmission delay information and the second transmission delay information. Alternatively, the third information 1 may include one piece of total delay information, and the total delay information may be a sum of values indicated by the first transmission delay information and the second transmission delay information. For example, the value indicated by the first transmission delay information is a sum of an uplink transmission delay and a downlink transmission delay of data packet transmission between the access network element and the terminal device, and the value indicated by the second transmission delay information is a sum of an uplink transmission delay and a downlink transmission delay of data packet transmission between the access network element and the second UPF network element. In this case, the total delay information is the sum of the uplink transmission delay and the downlink transmission delay of data packet transmission between the access network element and the terminal device + the sum of the uplink transmission delay and the downlink transmission delay of data packet transmission between the access network element and the second UPF network element. That the second edge application server determines the first congestion control parameter information based on the third information 1 may be: The second edge application server determines the first congestion control parameter information based on the first transmission delay information, the downlink GFBR of the first service, and the second transmission delay information (or the second edge application server determines the first congestion control parameter information based on the total delay information and the downlink GFBR).

In the foregoing examples, for a related implementation in which the second edge application server determines the first congestion control parameter information based on the third information 1, refer to the descriptions in which the SMF network element determines the first congestion control parameter information.

S605: The SMF network element sends third information 2 to the terminal device, and correspondingly, after receiving the third information 2, the terminal device may determine second congestion control parameter information based on the third information 2.

Herein, in an example, the third information 2 may include the first transmission delay information. That the terminal device determines the second congestion control parameter information based on the third information 2 may be: The terminal device determines the second congestion control parameter information based on the first transmission delay information.

In another example, the third information 2 may include the first transmission delay information and an uplink GFBR of the first service. That the terminal device determines the second congestion control parameter information based on the third information 2 may be: The terminal device determines the second congestion control parameter information based on the first transmission delay information and the uplink GFBR of the first service.

In another example, the third information 2 may include the first transmission delay information, an uplink GFBR of the first service, and second transmission delay information. It should be noted that the third information 2 may include two types of delay information, namely, the first transmission delay information and the second transmission delay information. Alternatively, the third information 2 may include one piece of total delay information, and the total delay information may be a sum of values indicated by the first transmission delay information and the second transmission delay information. That the terminal device determines the second congestion control parameter information based on the third information 2 may be: The terminal device determines the second congestion control parameter information based on the first transmission delay information, the uplink GFBR of the first service, and the second transmission delay information (or the terminal device determines the second congestion control parameter information based on the total delay information and the uplink GFBR).

In the foregoing examples, for a related implementation in which the terminal device determines the second congestion control parameter information based on the third information 2, refer to the descriptions in which the SMF network element determines the second congestion control parameter information.

For related implementations of S604 and S605, refer to the descriptions of S505 and S506 in Embodiment 1. It should be noted that for the SMF network element sending the third information 2 to the terminal device, if the SMF network element sends the third information 2 to an application client in the terminal device by using the first edge application server, the application client may determine the second congestion control parameter information based on the third information 2. If the SMF network element sends the third information 2 to an edge enabler client in the terminal device by using a first edge enabler server (namely, a first AF network element), the edge enabler client may send the third information 2 to an application client in the terminal device, so that the application client determines the second congestion control parameter information based on the third information 2. Alternatively, after receiving the third information 2, the edge enabler client may determine the second congestion control parameter information based on the third information 2, and further send the second congestion control parameter information to an application client.

S606: The SMF network element performs user plane re-configuration.

S607: The terminal device establishes a transport layer connection to the second edge application server.

S608: The terminal device and the second edge application server transmit a data packet of the first service by using a second path.

In the foregoing manner, after service migration occurs, a data sending network element (the terminal device or the second edge application server) may determine, based on the congestion control parameter information, a data amount of the first service sent to the second UPF network element for the first time, so that a slow start phase can be accelerated or even skipped, congestion control for re-establishing the transport layer connection can be optimized, data transmission efficiency can be improved, and a data transmission delay can be reduced. In addition, because the congestion control parameter information is determined based on at least the first transmission delay information, the determined congestion control parameter information is more reasonable. In addition, the SMF network element may respectively send the third information 1 and the third information 2 to the second edge application server and the terminal device, and the second edge application server and the terminal device calculate the corresponding congestion control parameter information, so that processing load of the SMF network element can be effectively reduced.

### Embodiment 3

In Embodiment 3, a possible implementation procedure of the data transmission method is described based on Solution 3.

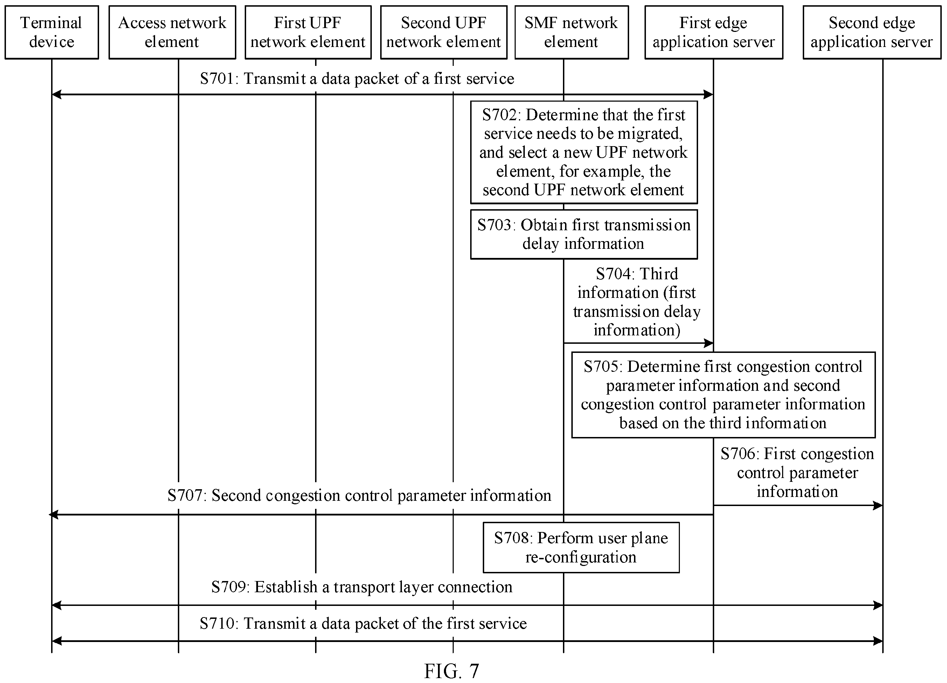

FIG. 7 is a schematic flowchart corresponding to a data transmission method according to Embodiment 3 of this application. As shown in FIG. 7, the method may include the following steps.

S701: A terminal device and a first edge application server transmit a data packet of a first service by using a first path.

Herein, the transmitting a data packet of a first service by using a first path may include: transmitting an uplink data packet and/or a downlink data packet of the first service by using the first path. The first path may be: the terminal device---an access network element---a first UPF network element---the first edge application server corresponding to the first UPF network element.

S702: An SMF network element determines that the first service needs to be migrated, and selects a new UPF network element. For example, the new UPF network element selected by the SMF network element is a second UPF network element.

Herein, the SMF network element may determine, in a plurality of manners, that the first service needs to be migrated. For example, refer to Implementation 1 and Implementation 2 that are described in S502 in Embodiment 1.

S703: The SMF network element obtains first transmission delay information of data packet transmission between the access network element and the terminal device.

Herein, the first transmission delay information may include at least one of the following: an uplink transmission delay of data packet transmission between the access network element and the terminal device, a downlink transmission delay of data packet transmission between the access network element and the terminal device, and a sum of the uplink transmission delay and the downlink transmission delay of data packet transmission between the access network element and the terminal device.

For example, the SMF network element may obtain the first transmission delay information in a plurality of manners. For example, refer to an implementation described in S503 in another embodiment, for example, Embodiment 1.

S704: The SMF network element sends third information to the first edge application server, and correspondingly, the first edge application server may receive the third information.

Herein, the third information may include the first transmission delay information; the third information may include the first transmission delay information, and an uplink GFBR and a downlink GFBR of the first service; or the third information may include the first transmission delay information, an uplink GFBR and a downlink GFBR of the first service, and second transmission delay information. In this case, the third information may include two types of delay information, namely, the first transmission delay information and the second transmission delay information. Alternatively, the third information may include one piece of total delay information, and the total delay information may be a sum of values indicated by the first transmission delay information and the second transmission delay information. For example, the value indicated by the first transmission delay information is the sum of the uplink transmission delay and the downlink transmission delay of data packet transmission between the access network element and the terminal device, and the value indicated by the second transmission delay information is a sum of an uplink transmission delay and a downlink transmission delay of data packet transmission between the access network element and the second UPF network element. In this case, the total delay information is the sum of the uplink transmission delay and the downlink transmission delay of data packet transmission between the access network element and the terminal device + the sum of the uplink transmission delay and the downlink transmission delay of data packet transmission between the access network element and the second UPF network element.

For example, the SMF network element may send the third information to a first AF network element, and may further send migration indication information, second identification information of the first service, and identification information of the terminal device. After receiving the third information, the migration indication information, the second identification information of the first service, and the identification information of the terminal device, the first AF network element may determine, based on the migration indication information, that an edge application server needs to be switched to a second edge application server, and send the third information, the second identification information of the first service, the identification information of the terminal device, and identification information of the second edge application server to the first edge application server.

S705: The first edge application server determines first congestion control parameter information and second congestion control parameter information based on the third information.

Herein, in an example, if the third information includes the first transmission delay information, the first edge application server may determine the first congestion control parameter information based on the first transmission delay information, and determine the second congestion control parameter information based on the first transmission delay information.

In another example, if the third information includes the first transmission delay information, and the uplink GFBR and the downlink GFBR of the first service, the first edge application server may determine the first congestion control parameter information based on the first transmission delay information and the downlink GFBR, and determine the second congestion control parameter information based on the first transmission delay information and the uplink GFBR.

In another example, if the third information includes the first transmission delay information, the uplink GFBR and the downlink GFBR of the first service, and the second transmission delay information, the first edge application server may determine the first congestion control parameter information based on the first transmission delay information, the second transmission delay information, and the downlink GFBR (or the first edge application server may determine the first congestion control parameter information based on the total delay information and the downlink GFBR), and determine the second congestion control parameter information based on the first transmission delay information, the second transmission delay information, and the uplink GFBR (or determine the second congestion control parameter information based on the total delay information and the uplink GFBR).

In the foregoing examples, for a step in which the first edge application server determines the first congestion control parameter information based on the third information, refer to the descriptions in which the SMF network element determines the first congestion control parameter information. For a step in which the first edge application server determines the second congestion control parameter information based on the third information, refer to the descriptions in which the SMF network element determines the second congestion control parameter information.

S706: The first edge application server sends the first congestion control parameter information to the second edge application server.

For example, the first edge application server may send the first congestion control parameter information to the second edge application server based on the identification information, of the second edge application server, received from the first AF network element, and may further send the second identification information of the first service and the identification information of the terminal device. Correspondingly, after receiving the first congestion control parameter information, the second identification information of the first service, and the identification information of the terminal device, the second edge application server may learn, based on the second identification information of the first service and the identification information of the terminal device, that the first congestion control parameter information corresponds to the first service in the terminal device, and may further determine, based on the first congestion control parameter information, a data amount of the first service sent to the terminal device for the first time.

In addition, the first edge application server and the second edge application server may migrate context of an application layer and context of a transport layer. For a specific implementation, refer to a conventional technology.

S707: The first edge application server sends the second congestion control parameter information to the terminal device.

For example, the first edge application server may send the second congestion control parameter information to the terminal device by using the first UPF network element and the access network element, and may further send the second identification information of the first service. Correspondingly, after receiving the second congestion control parameter information and the second identification information of the first service, the terminal device may learn, based on the second identification information of the first service, that the second congestion control parameter information corresponds to the first service in the terminal device, and may further determine, based on the second congestion control parameter information, a data amount of the first service sent to the second edge application server for the first time.

S708: The SMF network element performs user plane re-configuration.

Herein, that the SMF network element performs user plane re-configuration may include: The SMF network element establishes a PDU session between the terminal device and the second UPF network element for the terminal device. For a specific implementation, refer to the conventional technology.

It should be noted that, in a possible implementation, after the first edge application server and the second edge application server complete migrating the context of the application layer and the context of the transport layer, the first AF network element may return an ACK to the SMF network element, so that after receiving the ACK, the SMF network element can perform user plane re-configuration. In another possible implementation, when sending information such as the third information to the first AF network element, the SMF network element may start a timer. After the timer expires, the SMF network element may perform user plane re-configuration. Duration of the timer may be set based on duration required by the first edge application server and the second edge application server to migrate the context of the application layer and the context of the transport layer. This is not specifically limited. In this case, the first AF network element may not need to return the ACK to the SMF network element, so that signaling overheads can be reduced.

S709: The terminal device establishes a transport layer connection to the second edge application server.

It should be noted that, in a possible implementation, after the terminal device establishes the transport layer connection to the second edge application server, a transport layer connection between the terminal device and the first edge application server may be released (or deleted). For example, release may be triggered by the terminal device, or release may be triggered by the first edge application server. This is not limited in this embodiment of this application. In another possible implementation, before sending the first congestion control parameter information, the second identification information of the first service, and the identification information of the terminal device to the second edge application server, the first edge application server may trigger release of a transport layer connection between the terminal device and the first edge application server, so that the first edge application server can send the first congestion control parameter information, the second identification information of the first service, and the identification information of the terminal device to the second edge application server, and can further send transmission interruption information of the first service (where for example, the transmission interruption information may include a sequence number of the last data packet of the first service sent by the first edge application server to the terminal device, for example, a data packet n). In this way, the second edge application server learns of the transmission interruption information of the first service, and may further continue to transmit the first service based on the transmission interruption information (where for example, a 1^{st} data packet sent by the second edge server to the terminal device may be a data packet n+1). It should be understood that specific time at which the transport layer connection between the terminal device and the first edge application server is released is not limited in this embodiment of this application.

S710: The terminal device and the second edge application server transmit a data packet of the first service by using a second path.

Herein, the transmitting a data packet of the first service by using the second path may include: transmitting an uplink data packet and/or a downlink data packet of the first service by using the second path. The second path may be: the terminal device---the access network element---the second UPF network element---the second edge application server.

It should be noted that, in the foregoing procedure, the first edge application server calculates the first congestion control parameter information and the second congestion control parameter information. In another possible embodiment, the first AF network element may calculate the first congestion control parameter information and the second congestion control parameter information based on the third information from the SMF network element. To be specific, in S704, after receiving the third information, the migration indication information, the second identification information of the first service, and the identification information of the terminal device that are sent by the SMF network element, the first AF network element may determine, based on the migration indication information, that the edge application server needs to be switched to the second edge application server, and may determine the first congestion control parameter information and the second congestion control parameter information based on the third information. Further, the first AF network element sends the first congestion control parameter information (together with the second identification information of the first service and the identification information of the terminal device) to the second edge application server, and sends the second congestion control parameter information (together with the second identification information of the first service) to the terminal device. In this embodiment of this application, an execution body for calculating the first congestion control parameter information and the second congestion control parameter information may not be limited.

There may be a plurality of implementations in which the first AF network element sends the first congestion control parameter information (together with the second identification information of the first service and the identification information of the terminal device) to the second edge application server. For example, in a possible implementation, the first AF network element sends the first congestion control parameter information (together with the second identification information of the first service and the identification information of the terminal device) to the first edge application server, so that the first edge application server sends the first congestion control parameter information (together with the second identification information of the first service and the identification information of the terminal device) to the second edge application server. In another possible implementation, the first AF network element sends the first congestion control parameter information (together with the second identification information of the first service and the identification information of the terminal device) to a second AF network element, so that the second AF network element sends the first congestion control parameter information (together with the second identification information of the first service and the identification information of the terminal device) to the second edge application server.

There may be a plurality of implementations in which the first AF network element sends the second congestion control parameter information (together with the second identification information of the first service) to the terminal device. For example, in a possible implementation, the first AF network element sends the second congestion control parameter information (together with the second identification information of the first service) to the first edge application server, so that the first edge application server can send the second congestion control parameter information (together with the second identification information of the first service) to the terminal device (which may be specifically an application client in the terminal device). In another possible implementation, the first AF network element sends the second congestion control parameter information (together with the second identification information of the first service) to the terminal device (which may be specifically an edge enabler client in the terminal device), so that the edge enabler client in the terminal device sends the second congestion control parameter information (together with the second identification information of the first service) to an application client in the terminal device.

In the foregoing manner, after service migration occurs, a data sending network element (the terminal device or the second edge application server) may determine, based on the congestion control parameter information, a data amount of the first service sent to the second UPF network element for the first time, so that a slow start phase can be accelerated or even skipped, congestion control for re-establishing the transport layer connection can be optimized, data transmission efficiency can be improved, and a data transmission delay can be reduced. In addition, because the congestion control parameter information is determined based on at least the first transmission delay information, the determined congestion control parameter information is more reasonable. In addition, the SMF network element may send the third information to the first edge application server, and the first edge application server calculates the first congestion control parameter information and the second congestion control parameter information, and respectively sends the first congestion control parameter information and the second congestion control parameter information to the second edge application server and the terminal device, so that processing loads of the SMF network element, the second edge application server, and the terminal device can be effectively reduced.

For Embodiment 1 to Embodiment 3, it should be noted that:
(1) Step numbers of the flowcharts described in Embodiment 1 to Embodiment 3 are merely examples of performing the procedure, and do not constitute a limitation on a sequence of performing the steps. In embodiments of this application, there is no strict execution sequence among steps that do not have a time sequence dependency on each other. In addition, not all the steps shown in the flowcharts are mandatory steps, and some steps may be added to or deleted from the flowcharts based on an actual requirement.
(2) The foregoing focuses on differences between different embodiments in Embodiment 1 to Embodiment 3. For other content different from the differences, Embodiment 1 to Embodiment 3 may be mutually referenced. In addition, in a same embodiment, different implementations or different examples may also be mutually referenced.

The foregoing mainly describes the solutions provided in embodiments of this application from a perspective of device interaction. It may be understood that, to implement the foregoing functions, the core network element, the server, or the terminal device may include corresponding hardware structures and/or software modules for performing the functions. A person skilled in the art should be easily aware that, in embodiments of this application, the units and algorithm steps in the examples described with reference to embodiments disclosed in this specification can be implemented by hardware or a combination of hardware and computer software. Whether a function is performed by hardware or hardware driven by computer software depends on a particular application and a design constraint of the technical solutions. A person skilled in the art may use different methods to implement the described functions for each particular application, but it should not be considered that the implementation goes beyond the scope of this application.

In embodiments of this application, functional unit division may be performed on the core network element, the server, or the terminal device based on the foregoing method examples. For example, each functional unit may be obtained through division based on a corresponding function, or two or more functions may be integrated into one unit. The integrated unit may be implemented in a form of hardware, or may be implemented in a form of a software functional unit.

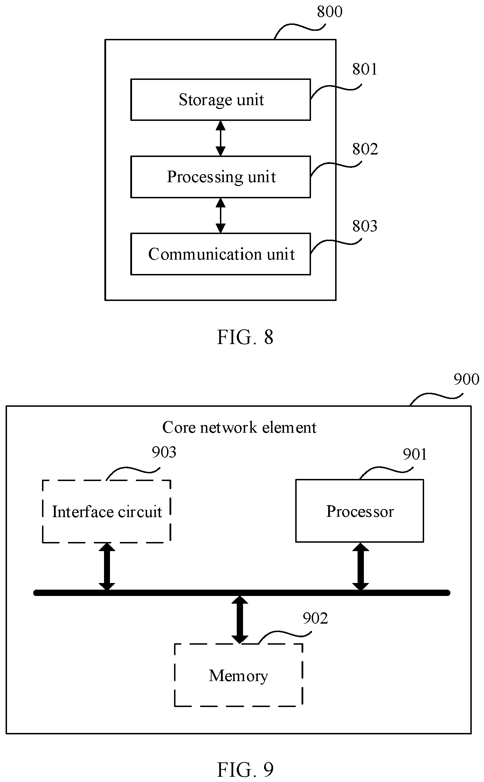

When an integrated unit is used, FIG. 8 is a block diagram of a possible example of an apparatus according to an embodiment of this application. As shown in FIG. 8, the apparatus 800 may include a processing unit 802 and a communication unit 803. The processing unit 802 is configured to: control and manage actions of the apparatus 800. The communication unit 803 is configured to support communication between the apparatus 800 and another device. Optionally, the communication unit 803 is also referred to as a transceiver unit, and may include a receiving unit and/or a sending unit, respectively configured to perform a receiving operation and a sending operation. Optionally, the apparatus 800 may further include a storage unit 801, configured to store program code and/or data of the apparatus 800.

For example, the apparatus 800 may be the core network element (for example, the SMF network element) in the foregoing embodiment, or may be a chip disposed in the core network element. The processing unit 802 may support the apparatus 800 in performing the actions of the core network element in the foregoing method examples. Alternatively, the processing unit 802 mainly performs internal actions of the core network element in the method examples, and the communication unit 803 may support communication between the apparatus 800 and another device.

Specifically, in an embodiment, the processing unit 802 is configured to obtain first transmission delay information of data packet transmission between an access network element and a terminal device. The communication unit 803 is configured to send third information to a first edge application server corresponding to a first UPF network element or a first edge enabler server corresponding to the first edge application server, where the third information includes the first transmission delay information, the third information is used to determine congestion control parameter information, and the congestion control parameter information indicates a data amount of a first service sent by a data sending network element to a second UPF network element for the first time after a UPF network element that serves the first service in the data sending network element is switched from the first UPF network element to the second UPF network element.

In a possible design, the communication unit 803 is further configured to: send first information to the first UPF network element, where the first information is used to request the first transmission delay information; and receive the first transmission delay information from the first UPF network element; or send second information to an NWDAF network element, where the second information is used to request the first transmission delay information; and receive the first transmission delay information from the NWDAF.

In a possible design, the first information includes 5-tuple information of the first service.

In a possible design, the second information includes QoS parameter information of the first service and an identifier of the access network element.

In a possible design, the third information further includes a GFBR of the first service; or the third information further includes a GFBR of the first service and second transmission delay information of data packet transmission between the access network element and the second UPF network element.

In a possible design, the second transmission delay information is determined based on topology information between the access network element and the second UPF network element.

In a possible design, the second transmission delay information is transmission delay lower bound information of data packet transmission between the access network element and the second UPF network element.

In a possible design, the GFBR of the first service is an uplink GFBR, the data sending network element is the terminal device, and the data amount of the first service sent by the data sending network element to the second UPF network element for the first time is a data amount of the first service sent by the terminal device by using the second UPF network element to a second edge application server corresponding to the second UPF network element for the first time.

In a possible design, the GFBR of the first service is a downlink GFBR, the data sending network element is a second edge application server corresponding to the second UPF network element, and the data amount of the first service sent by the data sending network element to the second UPF network element for the first time is a data amount of the first service sent by the second edge application server to the terminal device by using the second UPF network element for the first time.

For another example, the apparatus 800 may be the server (for example, the first edge enabler server) in the foregoing embodiment, or may be a chip disposed in the server. The processing unit 802 may support the apparatus 800 in performing actions of the server in the foregoing method examples. Alternatively, the processing unit 802 mainly performs internal actions of the server in the method examples, and the communication unit 803 may support communication between the apparatus 800 and another device.

Specifically, in an embodiment, the communication unit 803 is configured to receive third information from an SMF network element, where the third information includes first transmission delay information of data packet transmission between an access network element and a terminal device. The processing unit 802 is configured to determine congestion control parameter information based on the third information, where the congestion control parameter information indicates a data amount of a first service sent by a data sending network element to a second UPF network element for the first time after a UPF network element that serves the first service in the data sending network element is switched from a first UPF network element to the second UPF network element. The communication unit 803 is further configured to send the congestion control parameter information to the data sending network element.

In a possible design, the data sending network element is the terminal device, and the data amount of the first service sent by the data sending network element to the second UPF network element for the first time is a data amount of the first service sent by the terminal device by using the second UPF network element to a second edge application server corresponding to the second UPF network element for the first time.

In a possible design, the communication unit 803 is specifically configured to send the congestion control parameter information to the terminal device by using a first edge application server corresponding to the first UPF network element.

In a possible design, the third information further includes an uplink GFBR of the first service; or the third information further includes an uplink GFBR of the first service and second transmission delay information of data packet transmission between the access network element and the second UPF network element.

In a possible design, the data sending network element is a second edge application server corresponding to the second UPF network element, and the data amount of the first service sent by the data sending network element to the second UPF network element for the first time is a data amount of the first service sent by the second edge application server to the terminal device by using the second UPF network element for the first time.

In a possible design, the communication unit 803 is specifically configured to: send the congestion control parameter information to the second edge application server by using a first edge application server corresponding to the first UPF network element; or send the congestion control parameter information to the second edge application server by using a second edge enabler server corresponding to the second edge application server.

In a possible design, the third information further includes a downlink GFBR of the first service; or the third information further includes a downlink GFBR of the first service and second transmission delay information of data packet transmission between the access network element and the second UPF network element.

For another example, the apparatus 800 may be the data sending network element (for example, the second edge application server or the terminal device) in the foregoing embodiment, or may be a chip disposed in the data sending network element. The processing unit 802 may support the apparatus 800 in performing actions of the data sending network element in the foregoing method examples. Alternatively, the processing unit 802 mainly performs internal actions of the data sending network element in the method examples, and the communication unit 803 may support communication between the apparatus 800 and another device.

Specifically, in an embodiment, the communication unit 803 is configured to: receive congestion control parameter information, where the congestion control parameter information indicates a data amount of a first service sent by the data sending network element to a second UPF network element for the first time after a UPF network element that serves the first service in the data sending network element is switched from a first UPF network element to the second UPF network element; and send a data packet of the first service based on the congestion control parameter information.

In a possible design, the data sending network element is a second edge application server corresponding to the second UPF network element, and the data amount of the first service sent by the data sending network element to the second UPF network element for the first time is a data amount of the first service sent by the second edge application server to the terminal device by using the second UPF network element for the first time.

In a possible design, the communication unit 803 is specifically configured to: receive the congestion control parameter information sent by a first edge application server corresponding to the first UPF network element; or receive the congestion control parameter information sent by a second edge enabler server corresponding to the second edge application server.

In a possible design, the data sending network element is the terminal device, and the data amount of the first service sent by the data sending network element to the second UPF network element for the first time is a data amount of the first service sent by the terminal device by using the second UPF network element to a second edge application server corresponding to the second UPF network element for the first time.

In a possible design, the communication unit 803 is specifically configured to: receive the congestion control parameter information sent by a first edge application server corresponding to the first UPF network element; or receive the congestion control parameter information sent by a first edge enabler server corresponding to a first edge application server.

It should be understood that division into units in the apparatus is merely logical function division. During actual implementation, all or some of the units may be integrated into one physical entity or may be physically separated. In addition, all the units in the apparatus may be implemented in a form in which a processing element invokes software, or may be implemented in a form of hardware; or some units may be implemented in a form in which a processing element invokes software, and some units are implemented in a form of hardware. For example, each unit may be a separately disposed processing element, or may be integrated into a chip of the apparatus for implementation. In addition, each unit may alternatively be stored in a memory in a form of a program to be invoked by a processing element of the apparatus to perform a function of the unit. In addition, all or some of the units may be integrated, or may be implemented independently. The processing element herein may also be referred to as a processor, and may be an integrated circuit having a signal processing capability. In an implementation process, operations in the foregoing methods or the foregoing units may be implemented by using a hardware integrated logic circuit in the processing element, or may be implemented in a form in which the processing element invokes software.

In an example, a unit in any one of the foregoing apparatuses may be one or more integrated circuits configured to implement the foregoing methods, for example, one or more application-specific integrated circuits (application-specific integrated circuits, ASICs), one or more microprocessors (digital signal processors, DSPs), one or more field programmable gate arrays (field programmable gate arrays, FPGAs), or a combination of at least two of these forms of integrated circuits. For another example, when the units in the apparatus may be implemented in a form in which a processing element schedules a program, the processing element may be a processor, for example, a general-purpose central processing unit (central processing unit, CPU) or another processor that can invoke the program. For another example, the units may be integrated together and implemented in a form of a system-on-a-chip (system-on-a-chip, SOC).

The foregoing unit configured for receiving is an interface circuit of the apparatus, and is configured to receive a signal from another apparatus. For example, when the apparatus is implemented in a manner of a chip, the receiving unit is an interface circuit that is of the chip and that is configured to receive a signal from another chip or apparatus. The foregoing unit configured for sending is an interface circuit of the apparatus, and is configured to send a signal to another apparatus. For example, when the apparatus is implemented in a manner of a chip, the sending unit is an interface circuit that is of the chip and that is configured to send a signal to another chip or apparatus.

FIG. 9 is a schematic diagram of a structure of a core network element according to an embodiment of this application. The core network element may be the SMF network element in the foregoing embodiment, and is configured to implement functions of the SMF network element in the foregoing embodiment.

As shown in FIG. 9, the core network element 900 may include a processor 901, a memory 902, and an interface circuit 903. The processor 901 may be configured to: process a communication protocol and communication data, and control the core network element 900. The memory 902 may be configured to store a program and data. The processor 901 may perform, based on the program, the method performed by the core network element in embodiments of this application. The interface circuit 903 may be used by the core network element 900 to communicate with another device. The communication may be wired communication or wireless communication. The interface circuit may be, for example, a service-oriented communication interface.

Alternatively, the memory 902 may be externally connected to the core network element 900. In this case, the core network element 900 may include an interface circuit 903 and a processor 901. Alternatively, the interface circuit 903 may be externally connected to the core network element 900. In this case, the core network element 900 may include a memory 902 and a processor 901. When both the interface circuit 903 and the memory 902 are externally connected to the core network element 900, the core network element 900 may include a processor 901.

The core network element shown in FIG. 9 can implement processes related to the core network element in the foregoing method embodiments. Operations and/or functions of the modules in the core network element shown in FIG. 9 are separately used to implement corresponding procedures in the foregoing method embodiments. For details, refer to the descriptions in the foregoing method embodiments. To avoid repetition, detailed descriptions are properly omitted herein.

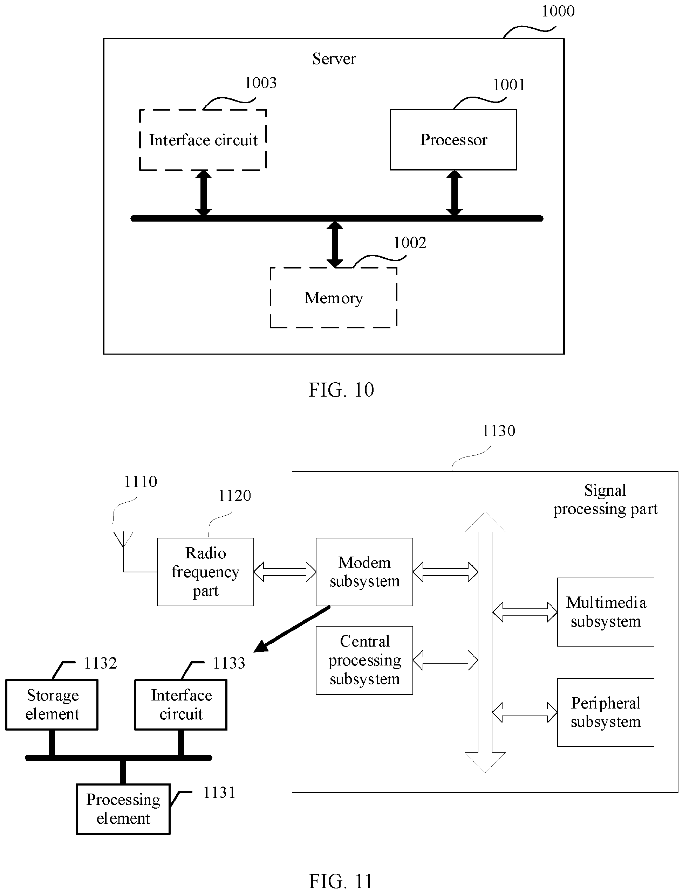

FIG. 10 is a schematic diagram of a structure of a server according to an embodiment of this application. The server may be the first edge enabler server, the first edge application server, or the second edge application server in the foregoing embodiment, and is configured to implement functions of the first edge enabler server, the first edge application server, or the second edge application server in the foregoing embodiment.

As shown in FIG. 10, the server 1000 may include a processor 1001, a memory 1002, and an interface circuit 1003. The processor 1001 may be configured to: process a communication protocol and communication data, and control the server 1000. The memory 1002 may be configured to store a program and data. The processor 1001 may perform, based on the program, the method performed by the server in embodiments of this application. The interface circuit 1003 may be used by the server 1000 to communicate with another device. The communication may be wired communication or wireless communication. The interface circuit may be, for example, a service-oriented communication interface.

Alternatively, the memory 1002 may be externally connected to the server 1000. In this case, the server 1000 may include an interface circuit 1003 and a processor 1001. Alternatively, the interface circuit 1003 may be externally connected to the server 1000. In this case, the server 1000 may include a memory 1002 and a processor 1001. When both the interface circuit 1003 and the memory 1002 are externally connected to the server 1000, the server 1000 may include a processor 1001.

The server shown in FIG. 10 can implement processes related to the server in the foregoing method embodiments. Operations and/or functions of modules in the server shown in FIG. 10 are separately used to implement corresponding procedures in the foregoing method embodiments. For details, refer to the descriptions in the foregoing method embodiments. To avoid repetition, detailed descriptions are properly omitted herein.

FIG. 11 is a schematic diagram of a structure of a terminal device according to an embodiment of this application. The terminal device is configured to implement operations of the terminal device in the foregoing embodiments. As shown in FIG. 11, the terminal device includes an antenna 1110, a radio frequency part 1120, and a signal processing part 1130. The antenna 1110 is connected to the radio frequency part 1120. In a downlink direction, the radio frequency part 1120 receives, by using the antenna 1110, information sent by a network device, and sends, to the signal processing part 1130 for processing, the information sent by the network device. In an uplink direction, the signal processing part 1130 processes information about the terminal device, and sends the information to the radio frequency part 1120. After processing the information about the terminal device, the radio frequency part 1120 sends the information to the network device by using the antenna 1110.

The signal processing part 1130 may include a modem subsystem, configured to implement processing on each communication protocol layer of data, may further include a central processing subsystem, configured to implement processing on an operating system and an application layer of the terminal device, and may further include another subsystem, for example, a multimedia subsystem or a peripheral subsystem, where the multimedia subsystem is configured to control a camera of the terminal device, a screen display, and the like, and the peripheral subsystem is configured to implement connection to another device. The modem subsystem may be a separately disposed chip.

The modem subsystem may include one or more processing elements 1131, for example, include a main control CPU and another integrated circuit. In addition, the modem subsystem may further include a storage element 1132 and an interface circuit 1133. The storage element 1132 is configured to store data and a program. However, a program used to perform the method performed by the terminal device in the foregoing method may not be stored in the storage element 1132, but is stored in a memory outside the modem subsystem, and is loaded and used by the modem subsystem when to be used. The interface circuit 1133 is configured to communicate with another subsystem.

The modem subsystem may be implemented by using a chip. The chip includes at least one processing element and an interface circuit. The processing element is configured to perform steps of any method performed by the terminal device. The interface circuit is configured to communicate with another apparatus. In an implementation, a unit used by the terminal device to implement the steps in the foregoing method may be implemented in a form of scheduling a program by a processing element. For example, an apparatus used for the terminal device includes a processing element and a storage element, and the processing element invokes a program stored in the storage element, to perform the method performed by the terminal device in the foregoing method embodiment. The storage element may be a storage element, namely, an on-chip storage element, that is located on a same chip as the processing element.

In another implementation, a program used to perform the method performed by the terminal device in the foregoing method may be on a storage element, namely, an off-chip storage element, that is located on a different chip from the processing element. In this case, the processing element invokes or loads a program to the on-chip storage element from the off-chip storage element, to invoke and perform the method performed by the terminal device in the foregoing method embodiment.

In still another implementation, a unit used by the terminal device to implement the steps in the foregoing method may be configured as one or more processing elements. The processing elements are disposed in a modem subsystem. The processing element herein may be an integrated circuit, for example, one or more ASICs, one or more DSPs, one or more FPGAs, or a combination of the types of integrated circuits. The integrated circuits may be integrated together to form a chip.

Units used by the terminal device to implement the steps in the foregoing method may be integrated and implemented in a form of an SOC. The SOC chip is configured to implement the foregoing method. At least one processing element and a storage element may be integrated into the chip, and the processing element invokes a program stored in the storage element to implement the foregoing method performed by the terminal device. Alternatively, at least one integrated circuit may be integrated into the chip, to implement the foregoing method performed by the terminal device. Alternatively, with reference to the foregoing implementations, functions of some units may be implemented by a program invoked by the processing element, and functions of some units are implemented by the integrated circuit.

It can be learned that the foregoing apparatus for the terminal device may include at least one processing element and an interface circuit, where the at least one processing element is configured to perform the method performed by any terminal device provided in the foregoing method embodiment. The processing element may perform some or all steps performed by the terminal device, in a first manner, to be specific, by invoking the program stored in the storage element; or may perform some or all steps performed by the terminal device, in a second manner, to be specific, by using a hardware integrated logical circuit in the processing element in combination with instructions; or may certainly perform, by combining the first manner and the second manner, some or all steps performed by the terminal device.

The processing element herein is the same as that described above, and may be implemented by using a processor. A function of the processing element may be the same as a function of the processing unit described in FIG. 11. For example, the processing element may be a general-purpose processor, for example, a CPU, or may be one or more integrated circuits configured to implement the foregoing method, for example, one or more ASICs, one or more microprocessors DSPs, one or more FPGAs, or a combination of at least two of the integrated circuit forms. The storage element may be implemented by using a memory. A function of the storage element may be the same as a function of the storage unit described in FIG. 11. The storage element may be implemented by using a memory. A function of the storage element may be the same as a function of the storage unit described in FIG. 11. The storage element may be a memory, or may be a general name of a plurality of memories.

The terminal device shown in FIG. 11 can implement processes related to the terminal device in the foregoing method embodiments. Operations and/or functions of modules in the terminal device shown in FIG. 11 are separately used to implement corresponding procedures in the foregoing method embodiments. For details, refer to the descriptions in the foregoing method embodiments. To avoid repetition, detailed descriptions are properly omitted herein.

The terms "system" and "network" may be used interchangeably in embodiments of this application. "At least one" means one or more, and "a plurality of" means two or more. The term "and/or" describes an association relationship between associated objects, and represents that three relationships may exist. For example, A and/or B may represent the following cases: Only A exists, both A and B exist, and only B exists, where A and B may be singular or plural. The character "/" usually indicates an "or" relationship between the associated objects. "At least one item (piece) of the following" or a similar expression thereof refers to any combination of these items, including any combination of singular items (pieces) or plural items (pieces). For example, "at least one of A, B, and C" includes A, B, C, AB, AC, BC, or ABC. In addition, unless otherwise specified, ordinal numbers such as "first" and "second" mentioned in embodiments of this application are used to distinguish between a plurality of objects, but are not used to limit a sequence, a time sequence, priorities, or importance of the plurality of objects.

A person skilled in the art should understand that embodiments of this application may be provided as a method, a system, or a computer program product. Therefore, this application may use a form of hardware only embodiments, software only embodiments, or embodiments with a combination of software and hardware. In addition, this application may use a form of a computer program product that is implemented on one or more computer-usable storage media (including but not limited to a disk memory, a CD-ROM, an optical memory, and the like) that include computer-usable program code.

This application is described with reference to the flowcharts and/or block diagrams of the method, the device (system), and the computer program product according to this application. It should be understood that computer program instructions may be used to implement each process and/or each block in the flowcharts and/or the block diagrams and a combination of a process and/or a block in the flowcharts and/or the block diagrams. The computer program instructions may be provided for a general-purpose computer, a dedicated computer, an embedded processor, or a processor of another programmable data processing device to generate a machine, so that the instructions executed by the computer or the processor of the another programmable data processing device generate an apparatus for implementing a specific function in one or more procedures in the flowcharts and/or in one or more blocks in the block diagrams.

The computer program instructions may be stored in a computer-readable memory that can instruct the computer or another programmable data processing device to work in a specific manner, so that the instructions stored in the computer-readable memory generate an artifact that includes an instruction apparatus. The instruction apparatus implements a specific function in one or more processes in the flowcharts and/or in one or more blocks in the block diagrams.

The computer program instructions may alternatively be loaded onto a computer or another programmable data processing device, so that a series of operations and steps are performed on the computer or the another programmable device, so that computer-implemented processing is generated. Therefore, the instructions executed on the computer or the another programmable device provide steps for implementing a specific function in one or more procedures in the flowcharts and/or in one or more blocks in the block diagrams.

It is clear that a person skilled in the art can make various modifications and variations to this application without departing from the spirit and scope of this application. This application is intended to cover these modifications and variations of this application provided that they fall within the scope of protection defined by the following claims and their equivalent technologies.

## Claims

1. A data transmission method, wherein the method comprises:
obtaining first transmission delay information of data packet transmission between an access network element and a terminal device; and
sending third information to a first edge application server corresponding to a first user plane function network element or a first edge enabler server corresponding to the first edge application server, wherein the third information comprises the first transmission delay information, the third information is used to determine congestion control parameter information, and the congestion control parameter information indicates a data amount of a first service sent by a data sending network element to a second user plane function network element for the first time after a user plane function network element that serves the first service in the data sending network element is switched from the first user plane function network element to the second user plane function network element.

2. The method according to claim 1, wherein the obtaining first transmission delay information of data packet transmission between an access network element and a terminal device comprises:
sending first information to the first user plane function network element, wherein the first information is used to request the first transmission delay information; and receiving the first transmission delay information from the first user plane function network element; or
sending second information to a network data analytics function network element, wherein the second information is used to request the first transmission delay information; and receiving the first transmission delay information from the network data analytics function network element.

3. The method according to claim 2, wherein the first information comprises 5-tuple information of the first service.

4. The method according to claim 2, wherein the second information comprises quality of service QoS parameter information of the first service and an identifier of the access network element.

5. The method according to any one of claims 1 to 4, wherein the third information further comprises a guaranteed flow bit rate GFBR of the first service; or
the third information further comprises a GFBR of the first service and second transmission delay information of data packet transmission between the access network element and the second user plane function network element.

6. The method according to claim 5, wherein the second transmission delay information is determined based on topology information between the access network element and the second user plane function network element.

7. The method according to claim 5 or 6, wherein the second transmission delay information is transmission delay lower bound information of data packet transmission between the access network element and the second user plane function network element.

8. The method according to any one of claims 5 to 7, wherein the GFBR of the first service is an uplink GFBR, the data sending network element is the terminal device, and the data amount of the first service sent by the data sending network element to the second user plane function network element for the first time is a data amount of the first service sent by the terminal device by using the second user plane function network element to a second edge application server corresponding to the second user plane function network element for the first time.

9. The method according to any one of claims 5 to 7, wherein the GFBR of the first service is a downlink GFBR, the data sending network element is a second edge application server corresponding to the second user plane function network element, and the data amount of the first service sent by the data sending network element to the second user plane function network element for the first time is a data amount of the first service sent by the second edge application server to the terminal device by using the second user plane function network element for the first time.

10. A data transmission method, wherein the method comprises:
receiving third information from a session management network element, wherein the third information comprises first transmission delay information of data packet transmission between an access network element and a terminal device;
determining congestion control parameter information based on the third information, wherein the congestion control parameter information indicates a data amount of a first service sent by a data sending network element to a second user plane function network element for the first time after a user plane function network element that serves the first service in the data sending network element is switched from a first user plane function network element to the second user plane function network element; and
sending the congestion control parameter information to the data sending network element.

11. The method according to claim 10, wherein the data sending network element is the terminal device, and the data amount of the first service sent by the data sending network element to the second user plane function network element for the first time is a data amount of the first service sent by the terminal device by using the second user plane function network element to a second edge application server corresponding to the second user plane function network element for the first time.

12. The method according to claim 11, wherein the sending the congestion control parameter information to the data sending network element comprises:
sending the congestion control parameter information to the terminal device by using a first edge application server corresponding to the first user plane function network element.

13. The method according to claim 11 or 12, wherein the third information further comprises an uplink GFBR of the first service; or
the third information further comprises an uplink GFBR of the first service and second transmission delay information of data packet transmission between the access network element and the second user plane function network element.

14. The method according to claim 10, wherein the data sending network element is a second edge application server corresponding to the second user plane function network element, and the data amount of the first service sent by the data sending network element to the second user plane function network element for the first time is a data amount of the first service sent by the second edge application server to the terminal device by using the second user plane function network element for the first time.

15. The method according to claim 14, wherein the sending the congestion control parameter information to the data sending network element comprises:
sending the congestion control parameter information to the second edge application server by using a first edge application server corresponding to the first user plane function network element; or
sending the congestion control parameter information to the second edge application server by using a second edge enabler server corresponding to the second edge application server.

16. The method according to claim 14 or 15, wherein the third information further comprises a downlink GFBR of the first service; or
the third information further comprises a downlink GFBR of the first service and second transmission delay information of data packet transmission between the access network element and the second user plane function network element.

17. A data transmission method, wherein the method comprises:
receiving congestion control parameter information, wherein the congestion control parameter information indicates a data amount of a first service sent by a data sending network element to a second user plane function network element for the first time after a user plane function network element that serves the first service in the data sending network element is switched from a first user plane function network element to the second user plane function network element; and
sending a data packet of the first service based on the congestion control parameter information.

18. The method according to claim 17, wherein the data sending network element is a second edge application server corresponding to the second user plane function network element, and the data amount of the first service sent by the data sending network element to the second user plane function network element for the first time is a data amount of the first service sent by the second edge application server to a terminal device by using the second user plane function network element for the first time.

19. The method according to claim 18, wherein the receiving congestion control parameter information comprises:
receiving the congestion control parameter information sent by a first edge application server corresponding to the first user plane function network element; or
receiving the congestion control parameter information sent by a second edge enabler server corresponding to the second edge application server.

20. The method according to claim 15, wherein the data sending network element is a terminal device, and the data amount of the first service sent by the data sending network element to the second user plane function network element for the first time is a data amount of the first service sent by the terminal device by using the second user plane function network element to a second edge application server corresponding to the second user plane function network element for the first time.

21. The method according to claim 20, wherein the receiving congestion control parameter information comprises:
receiving the congestion control parameter information sent by a first edge application server corresponding to the first user plane function network element; or
receiving the congestion control parameter information sent by a first edge enabler server corresponding to a first edge application server.

22. The method according to claim 21, wherein the receiving the congestion control parameter information sent by a first edge enabler server corresponding to a first edge application server comprises:
receiving, by an edge enabler client in the terminal device, the congestion control parameter information sent by the first edge enabler server, and sending the congestion control parameter information to an application client in the terminal device.

23. A communication apparatus, comprising a module configured to perform the method according to any one of claims 1 to 9.

24. A communication apparatus, comprising a module configured to perform the method according to any one of claims 10 to 16.

25. A communication apparatus, comprising a module configured to perform the method according to any one of claims 17 to 22.

26. A communication apparatus, comprising a processor, wherein the processor is coupled to a memory, the memory stores a computer program, and the processor is configured to invoke the computer program in the memory, to enable the communication apparatus to perform the method according to any one of claims 1 to 9.

27. A communication apparatus, comprising a processor, wherein the processor is coupled to a memory, the memory stores a computer program, and the processor is configured to invoke the computer program in the memory, to enable the communication apparatus to perform the method according to any one of claims 10 to 16.

28. A communication apparatus, comprising a processor, wherein the processor is coupled to a memory, the memory stores a computer program, and the processor is configured to invoke the computer program in the memory, to enable the communication apparatus to perform the method according to any one of claims 17 to 22.

29. A communication system, wherein the communication system comprises the communication apparatus according to claim 26, the communication apparatus according to claim 27, and the communication apparatus according to claim 28.

30. A computer-readable storage medium, wherein the storage medium stores a computer program or instructions, and when the computer program or the instructions are executed by a computer, the method according to any one of claims 1 to 9, the method according to any one of claims 10 to 16, or the method according to any one of claims 17 to 22 is implemented.

31. A computer program product, wherein when a computer reads and executes the computer program product, the computer is enabled to perform the method according to any one of claims 1 to 9, the method according to any one of claims 10 to 16, or the method according to any one of claims 17 to 22.
